# EUROPEAN PATENT APPLICATION

(11) **EP 4 787 744 A1**
(43) Date of publication of application: **05.08.2026**
(21) Application number: 26155791.2
(22) Date of filing: 02.02.2026
(51) Int. Cl.: H04J 14/00, G02B 6/35, H04Q 11/00

(54) **OPTICAL CIRCUIT SWITCH WITH MULTI-CORE FIBERS AND OPTICAL SYSTEMS IMPLEMENTING SAME**

(30) Priority: 03.02.2025 US 202563753179 P; 30.01.2026 US 202619464985
(71) Applicant: Google LLC, Mountain View, CA 94043 (US)
(72) Inventor: WANG, Daoyi, Mountain View, 94043 (US); LAM, Cedric Fung, Mountain View, 94043 (US)
(74) Representative: Betten & Resch

(57) **Abstract**

An optical communication system includes a pair of transceivers and an optical circuit switch with multi-core fibers at each port that provides a communication bridge between the pair of transceivers. The transceivers each transmit a forward transmission signal through a first single-core fiber and receives a reverse transmission signal through a second single-core fiber. A fan-in/fan-out device can be positioned between the switch and each transceiver along an optical path. The fan-in/fan-out device is configured to couple the light or transmission signal transmitted through the single-core fiber with a core of a multi-core fiber. The multi-core fiber is further coupled to the port.

## Description

### CROSS-REFERENCE TO RELATED APPLICATION

The present application claims the benefit of the filing date of U.S. Provisional Patent Application No. 63/753,179, filed February 3, 2025, the disclosure of which is hereby incorporated herein by reference.

### BACKGROUND

Fiber optics provide for the transmission of data, voice, and images by passing light through thin, transparent fibers, usually made of plastic or glass. Fiber optic cables that include one or more fibers are commonly used to transmit optical signals over long distances. Fiber optics can be beneficial due to their ability to provide high bandwidth and transmission speeds.

Fiber optic switches are used in fiber optic systems to control the flow of light in fiber optic networks, which allow for more efficient and reliable data transmission. Fiber optic switches selectively switch an optical signal that is delivered through an optical fiber or an integrated optical circuit to another optical fiber in an optical path.

### BRIEF SUMMARY

According to an aspect of the disclosure, an optical communication system includes a pair of transceivers and an optical circuit switch that provides a communication bridge between the pair of transceivers. The optical circuit switch includes multiple switch ports that are coupled to multi-core fibers. The transceivers each transmit a forward transmission signal through a single-core fiber and receive a reverse transmission signal through a second single-core fiber. Each port of the optical circuit switch is configured to receive the forward and reverse transmission signals from the multi-core fibers. A fan-in/fan-out device can be positioned between the switch and each transceiver along an optical path. The fan-in/fan-out device is configured to couple the light or transmission signal transmitted through the single-core fiber with a core of a multi-core fiber. The multi-core fiber is further coupled to the ports.

According to an aspect of the disclosure, an optical communication system includes a forward transmission transceiver and a reverse transmission transceiver in optical communication along an optical path; an optical circuit switch ("OCS") optically coupled to the forward transmission transceiver and the reverse transmission transceiver; a first single-core fiber and a second single-core fiber both coupled to the forward transmission transceiver; a multi-core fiber coupled to the first optical port; and a fan-in/fan-out device ( "FI/FO device"). The OCS has at least a first optical port and a second optical port, the OCS providing for communication between the forward and reverse transmission transceivers along the optical path. The first single-core fiber may be configured to transmit a forward optical transmission signal received from the forward transmission transceiver to the reverse transmission receiver through the OCS. The second single-core fiber may be configured to transmit a reverse optical transmission signal transmitted from the reverse transmission transceiver to the forward transmission transceiver through the OCS. The fan-in/fan-out device may further include a first collimator and a second collimator aligned with one another along the optical path. The FI/FO device may be configured to optically couple the forward optical transmission signal transmitted through the first single-core fiber with a core of the multi-core fiber. The first optical port may be coupled to the multi-core fiber. The first optical port may be configured to both transmit the forward optical transmission signal received from the first optical port to the second optical port and receive the reverse optical transmission signal transmitted from the second optical port along the optical path.

In one example of this aspect, the core of the multi-core fiber is a first core of the multi-core fiber. Additionally, the reverse optical transmission signal transmitted through the OCS is coupled with a second core of the multi-core fiber.

According to another example, the second optical port is configured to both transmit the forward optical transmission signal received from the forward transmission transceiver to the reverse transmission transceiver and to also transmit the reverse optical transmission signal received from the reverse transmission transceiver to the forward transmission transceiver along the optical path.

According to another example of this aspect, the first single-core fiber and the second single-core fiber comprise single-mode fibers.

According to another example of this aspect, the multi-core fiber is a first multi-core fiber and the system further comprises a second multi-core fiber. The OCS may further comprise a multi-core fiber collimator; and a mirror etched on a silicon chip. The mirror may be angled to redirect the forward optical transmission signal received from the first core of the first multi-core fiber at the first optical port of the OCS to a third core of the second multi-core fiber at the second optical port of the OCS. The mirror may also redirect the reverse optical transmission signal received from the second multi-core fiber to the first core of the first multi-core fiber, such that the forward and reverse optical transmission signals are both reflected by the mirror and transmitted through the first optical port.

In yet another example of this aspect, the first collimator comprises a first micro-lens having a first focal length and the second collimator comprises a second micro-lens having a second length that is different than the first focal length.

According to another example of this aspect, the first and second collimators are further configured to diplex the forward optical transmission signal transmitted through the first core of the multi-core fiber and the reverse optical transmission signal transmitted through the first optical port and the second core of the multi-core fiber.

According to another example of this aspect, the FI/FO device further comprises a laser diode configured to illuminate the first single-core fiber.

In yet another example of this aspect, the multi-core fiber is a dual-core fiber. The core of the multi-core fiber is a first core and the multi-core fiber further comprises a second core.

In still another example, the second core is optically coupled to the second single-core fiber.

In another example, an optical signal is transmitted along the optical path is the forward optical transmission signal when transmitted from the forward transmission transceiver to the reverse transmission transceiver through the OCS and the optical signal is the reverse optical transmission signal when transmitted from the reverse transmission transceiver to the forward transmission transceiver through the OCS.

According to another example of this aspect, the forward optical transmission signal and the reverse optical transmission signal are simultaneously transmitted through the first optical port and the second optical port.

According to another example of this aspect, the forward optical transmission signal and the reverse optical transmission signal are transmitted in series.

In another example of this aspect, the multi-core fiber is a first multi-core fiber, the FI/FO device is a first FI/FO device, and the system further comprises a third single-core fiber, a fourth single-core fiber, a second multi-core fiber, and a second FI/FO device. The third and the fourth single-core fibers, the second multi-core fiber, and the second FI/FO device extend along the optical path. The third single-core fiber may be configured to transmit the reverse optical transmission signal received from the reverse transmission transceiver to the second multi-core fiber. The second FI/FO device couples the third single-core fiber with the second multi-core fiber. The fourth single-core fiber may be configured to transmit a forward optical transmission signal received from the second multi-core fiber to the reverse transceiver. The second FI/FO device couples the fourth single-core fiber with the second multi-core fiber.

According to another example, the forward optical transmission signal is a first optical transmission signal, the reverse optical transmission signal is a first reverse optical transmission signal, the optical path is a first optical path, the forward transmission transceiver is a first forward transmission transceiver, and the reverse transmission transceiver is a first reverse transmission transceiver. The OCS may further comprise a third optical port and a fourth optical port. The optical communication system may further comprise a second forward transmission transceiver and a second reverse transmission transceiver in optical communication along a second optical path extending through the OCS, as well as third and fourth FI/FO devices positioned along the second optical path. A third multi-core fiber may be coupled to the third optical port and a fourth multi-core fiber may be coupled to the fourth optical port. A fifth single-core fiber may be configured to transmit the second forward optical transmission signal received from the second forward transmission transceiver to the third multi-core fiber. The third FI/FO device optically couples the fifth single-core fiber with the third multi-core fiber. A sixth single-core fiber may be configured to transmit the second reverse optical transmission signal received from the third multi-core fiber to the second forward transmission transceiver. The third FI/FO device optically couples the third multi-core fiber with the sixth single-core fiber. A seventh single-core fiber may be configured to transmit the second forward optical transmission signal received from the fourth multi-core fiber to the second reverse transceiver. The fourth FI/FO device may optically couple the seventh single-core fiber with the fourth multi-core fiber. An eighth single-core fiber may be configured to transmit the second reverse optical transmission signal received from the second reverse transceiver to the fourth multi-core fiber. The fourth FI/FO device couples the eighth single-core fiber with the fourth multi-core fiber. The third optical port may be coupled to the third multi-core fiber and is configured to receive and transmit the second forward optical transmission signal and the second reverse optical transmission signal . The fourth optical port may be coupled to the fourth multi-core fiber and is configured to receive and transmit the second forward optical transmission signal and the second reverse optical transmission signal.

According to another example of this aspect, the system further comprises a second multi-core fiber coupled to the second optical port; a third single-core fiber optically coupled to the forward and reverse transmission transceivers; and a fourth single-core fiber optically coupled to the forward and reverse transmission transceivers. The second multi-core fiber may further comprise a second core and a third core. The third single-core fiber is optically coupled to the second core of the multi-core fiber, and the fourth single-core fiber is optically coupled to the third core of the second multi-core fiber.

According to another example, the OCS further comprises one of a micro-electromechanical system ("MEMS") switch, a piezoelectric actuator switch, a robotic switch, or a liquid crystal switch.

According to another aspect of the disclosure, a micro-electro-mechanical switch includes a first optical port, a second optical port, a first multi-core fiber, a second multi-core fiber, a first MEMS die mirror array and a second MEMS die mirror array, and a first multi-core fiber collimator and a second multi-core fiber collimator optically coupled to the first and second MEMS die mirror arrays. The first multi-core fiber is coupled to the first optical port and includes a first core and a second core. The second multi-core fiber is coupled to the second optical port and includes a third core and a fourth core. The first MEMS die mirror array and the second MEMS die mirror can be optically coupled to the first and second optical ports. The first multi-core fiber collimator and the second multi-core fiber collimator optically coupled to the first and second die mirror arrays. The first core of the first multi-core fiber is configured to transmit a forward transmission signal along an optical path through the first optical port to the third core of the second multi-core fiber at the second optical port. The third core of the second multi-core fiber is configured to transmit a reverse transmission signal along the optical path through the second optical port to the first core of the first multi-core fiber at the first optical port. A first same mirror in the first MEMS die mirror array and a second same mirror in the second MEMS die mirror array are configured to simultaneously transmit the forward transmission signal and the reverse transmission signal between the first optical port and the second optical port.

According to an example of this aspect, the MEMS switch further comprises a first connector that directly couples the first multi-core fiber to the first optical port and the second multi-core fiber to the second optical port.

According to another example of this aspect, the MEMS switch further comprises a first connector that directly couples the first multi-core fiber to the first optical port and a second connector that couples the second multi-core fiber to the second optical port.

According to another example of this aspect, the optical path is a first optical path, the forward transmission signal is a first transmission signal, the reverse transmission signal is a first reverse transmission signal, and the MEMS switch further comprises a third multi-core fiber and a fourth multi-core fiber. The third multi-core fiber may be coupled to a third optical port and further comprise a fifth core and a sixth core, A fourth multi-core fiber may be coupled to a fourth optical port and further comprise a seventh core and an eighth core, The fifth core of the third multi-core fiber may be configured to transmit a second forward transmission signal through the third optical port to the seventh core of the fourth multi-core fiber at the second optical port along a second optical path. The eighth core of the fourth multi-core fiber may be configured to transmit a second reverse transmission signal through the fourth optical port to the sixth core of the third multi-core fiber at the third optical port along the second optical path. Another same mirror in the first MEMS die mirror array and another same mirror in the second MEMS die mirror array can be configured to simultaneously transmit the second forward transmission signal and the second reverse transmission signal between the third optical port and the fourth optical port.

### BRIEF DESCRIPTION OF THE DRAWINGS

FIG. 1 is a schematic view of an optical communication system according to an aspect of the disclosure.
FIG. 2 is a schematic view of an optical communication system according to an aspect of the disclosure.
FIG. 3 is an enlarged schematic view of a portion of the optical communication system according to an aspect of the disclosure.
FIG. 4 is a block diagram of example components of an example transmitter according to an aspect of the disclosure.
FIG. 5 is a block diagram of example components of an example receiver according to an aspect of the disclosure.
FIG. 6 is an enlarged view of a portion of the optical communication system illustrating a schematic example reverse transmission signal.
FIG. 7 is an example optical circuit switch for use as part of an optical communication system according to an aspect of the disclosure.
FIG. 8 is another schematic example of an optical circuit switch for use as part of an optical communication system according to an aspect of the disclosure.
FIG. 9 is an example component for use with an optical communication system according to an aspect of the disclosure.
FIGS. 10A and 10B are schematic diagrams depicting operation of a portion of an optical circuit switch according to an aspect of the disclosure.
FIG. 11 is a schematic diagram depicting operation of a portion of an optical circuit switch according to an aspect of the disclosure.
FIG. 12 is a schematic diagram depicting operation of a portion of an optical circuit switch according to an aspect of the disclosure.
FIG. 13 is a schematic diagram depicting an optical circuit switch according to an aspect of the disclosure.
FIG. 14A is a schematic diagram depicting another optical circuit switch according to an aspect of the disclosure.
FIG. 14B is a schematic diagram depicting a portion of the optical circuit switch of FIG. 14A according to an aspect of the disclosure.
FIG. 15 is a schematic diagram depicting another optical circuit switch according to an aspect of the disclosure.
FIG. 16 is a schematic diagram depicting the optical circuit switch of FIG. 15 as part of a larger fiber optic system.

### DETAILED DESCRIPTION

Traditional optical circuit switches in an optical system, including an optical communication system, implement a singular or single fiber at each port. This requires the presence of a port for each input fiber and each output fiber in the system. For example, a single input channel corresponding to a single port and a single output channel corresponding to a single port are required in such systems. While attempts have previously been made to either minimize the number of input and output ports on a single optical switch, including providing two optical switches to distribute the I/O ports within the system or the implementation of circulators to create bi-directional fibers that support forward and reverse signals, modem day optical fibers are now capable of transmitting data up to hundreds of terabytes (TB) of data per second. In addition to such pre-existing systems requiring increased transceiver and hardware costs to accommodate the additional structural features, they now face significant optical return loss of data and burst traffic error due to increased data transmissions.

Example systems and methods are disclosed to improve signal quality in bi-directional optical fiber ports of an optical circuit switch through the use of muti-core fibers. The configuration of the presently disclosed optical systems provide an optical circuit switch that receives multi-core fibers at each optical circuit switch connector or port. Only one switch port is implemented for each transmitting/receiving multi-core fiber, such that there is a one-to-one correspondence between a multi-core fiber (which both transmits and receives signals) and each port on the optical switch. That is, the switching and coupling optical components are shared for all fiber cores within each muti-core fiber. This configuration allows for a reduction in the number of ports on the optical circuit switch without increasing the switch form factor or requiring changes to the control algorithm at the switch. Smaller optical components and fewer elements for a certain switch radix can therefore be implemented. The switch level and component level manufacturing process is also simplified since fewer ports and connections are required to be present and monitored within the system. Such a configuration can also allow the hardware form factor to be as small as a single fiber switch and requires less installation space. Switch driving power may also be preserved and the complexity of the control algorithm may be reduced. In some examples, port handling count can be reduced and deployment or debugging speed can be increased. One or more of these improvements can additionally provide an overall cost savings for component costs and switch total cost of ownership.

The configuration of optical circuit switches according to aspects of the disclosure contrasts with traditional duplex fiber optical communication system, where a (2xN) x (2xN) switch is required, as well as 2xN of fibers from a switch to the forward and reverse transceivers, where "N" corresponds to the number of pairs of optical links or transceivers. The traditional duplex configuration requires a switch having a number N of pairs of links or transceivers to have two corresponding switch ports (*i.e.,* one corresponding input switch port and one receiving switch port). The traditional duplex fiber optical communication system, however, increases switch complexity, the required maintenance for each switch port, and the number of points along a switch that may be subject to error or failure. The doubled/increased switch port count also exponentially increases the challenges of switch manufacturability and reliability, and the doubled number of fiber paths slows down the deployment and debugging speed, which limits the system time to the market. Similarly, in a traditional fiber optical communication system implementing a circulator or other similar device that diplexes the transmission and receiving signal into a single fiber at the switch port, N optical links or transceivers is limited to (N x N) switch ports, in which the number of switch ports corresponds to the number of transceivers. Such diplexed switch port configurations, however, suffer from higher loss and transceiver cost with the addition of the optical circulator and multi-path interference effects that cause burst traffic errors, which in turn require precise and/or custom connections or structural hardware to minimize such effects.

Example systems are now described to provide an understanding of the disclosure, but one skilled in the relevant art will recognize that the disclosures can be implemented without one or more of the specific details, or with other methods, components, materials, or the like. In some instances, well-known structures, materials, or operations are not shown or described in detail but are nonetheless encompassed within the scope of the disclosure.

Reference throughout this specification to "the disclosure" or "aspect of the disclosure" means that a particular feature, structure, or characteristic described in connection with the disclosure is included in at least one described aspect of the disclosure. The particular features, structures, or characteristics may be combined in any suitable manner in one or more implementations.

Use of the multi-core fiber allows for a configuration where an optical circuit switch ("OCS") has a maximum number of switch ports in order to provide the greatest possible bandwidth and interconnect counts. Systems and methods are disclosed herein that utilize a muti-core fiber to create a bidirectional optical path within an OCS to provide for optimizing the bandwidth and interconnect counts of an OCS.

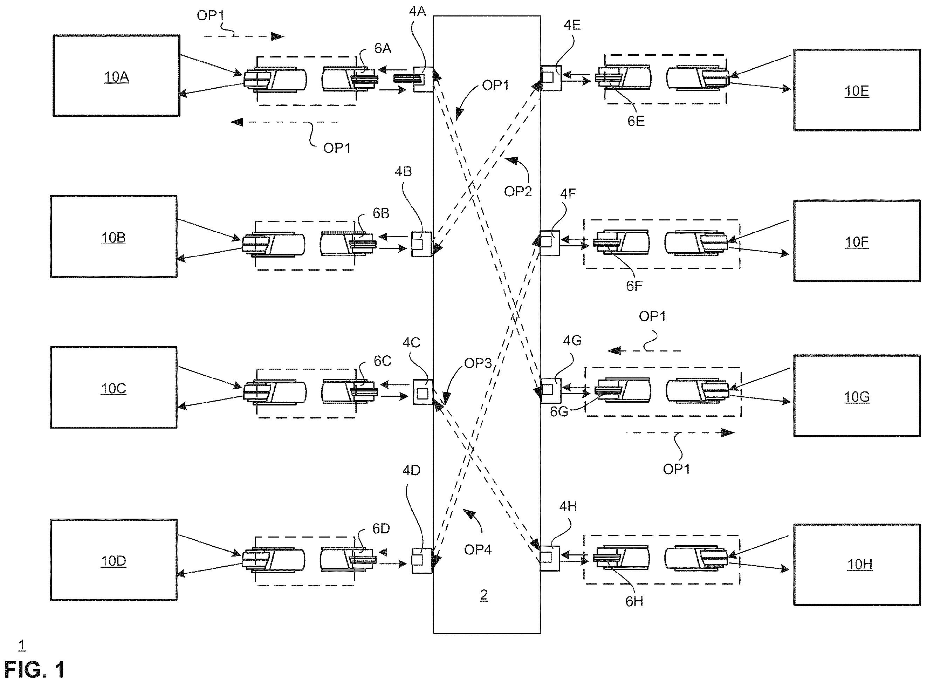

FIG. 1 depicts numerous optical pathways for an example optical communication system 1. System 1 may include a multi-core fiber optical circuit switch ("OCS") 2 having a plurality of input/output ("I/O") ports 4A-4H coupled to respective muti-core fibers 6A-6H (collectively "multi-core fibers 6"). Forward transceivers 10A-10D and reverse transceivers 10E-10H may be respectively coupled to the plurality of I/O ports 4A-4H. OCS 2 enables a pair of transceivers, for example one of forward transceivers 10A-10D and one of reverse transceivers 10E-10H, to communicate with one another along an optical path. For example, a first optical path OP1 may extend between forward transceiver 10A and reverse transceiver 10G through OCS 2; a second optical path OP2 may extend between forward transceiver 10B and reverse transceiver 10E through OCS 2; a third optical path OP3 may extend between forward transceiver 10C and reverse transceiver 10H through OCS 2; and a fourth optical path OP4 may extend between forward transceiver 10D and reverse transceiver 10F through OCS 2. As will be described, each port 4A-4D on the forward transmission side of OCS 2 is configured to transmit forward transmission signals from respective cores of a multi-core fiber 6A-6D to respective cores of multi-core fiber 6E-6H on reverse transmission side of OCS 2 through switch OCS 2 and vice versa. This configuration can allow for a reduction in the overall number of optical ports along OCS 2 in relation to the number of forward and reverse transmission signals, since each optical port 4A-4D can receive both a forward and reverse transmission signal.

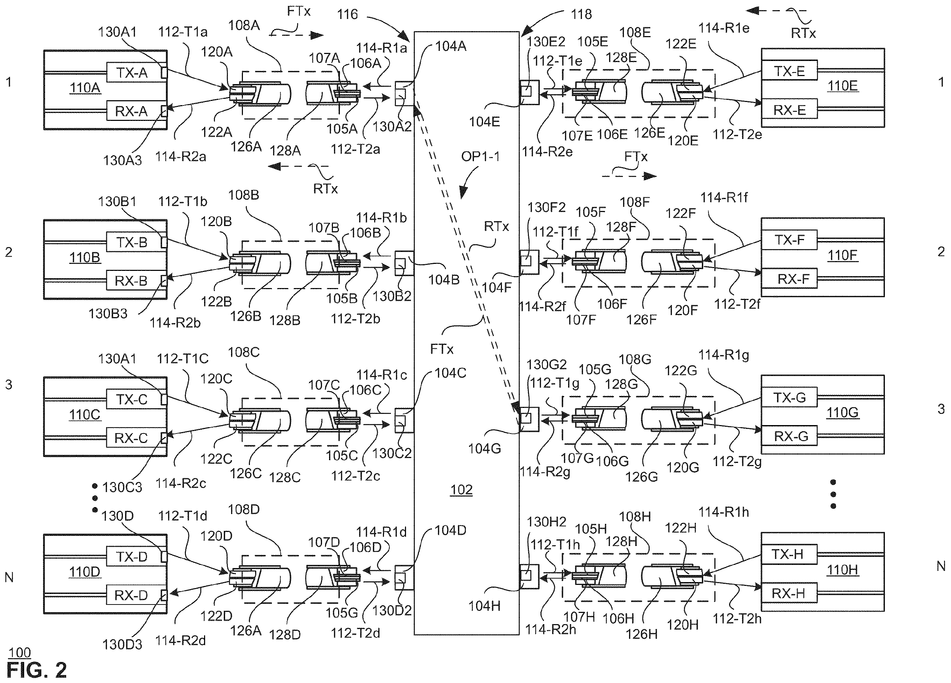

FIG. 2 depicts one example of an optical communication system 100 that incorporates an OCS 102 with multi-core fibers. System 100 may include a multi-core fiber optical circuit switch ("OCS") 102 having a plurality of input/output ("I/O") ports 104A-104H (collectively "ports 104" or ports 104A-104H) coupled to respective muti-core fibers 106A-106H (collectively "multi-core fibers 106"). Forward transceivers 110A-110D and reverse transceivers 110E-110H may be respectively coupled to the plurality of I/O ports 104A-104H.

System 100 provides multiple optical paths between pairs of transceivers 110A-110H. In this example, OCS 102 with multi-core fibers 106, enables pairs of forward transceivers 110A-110D and reverse transceivers 110E-110H to communicate with one another along numerous optical paths. Example optical paths can extend between two transceivers and include optical path OP1-1 that extends between transceiver 110A and transceiver 110G, as well as through multi-core fibers 106A, 106G and OCS 102, as depicted in FIG 2. Optical path OP1-1 can include a forward transmission optical path FTx that begins with a forward transmission signal received from forward transceiver 110A on forward transmission side 116, as well as a reverse optical path RTx along which transceiver 110G transmits a reverse transmission signal received from reverse transmission side 118 back to forward transceiver 110A. Additional optical paths can extend between remaining pairs of transceivers in the system. For example, a second optical path may extend between forward transceiver 110B and reverse transceiver 110E and through OCS 102; a third optical path OP3 may extend between forward transceiver 110C and reverse transceiver 110H and through OCS 102; and a fourth optical path OP4 may extend between forward transceiver 110D and reverse transceiver 110F and through OCS 102.

A plurality of fan-in/fan-out (hereafter "FI/FO") devices 108A-108H (collectively "FI/FO devices 108") are each coupled to a corresponding multi-core fiber 106A-106H at one end and single-core fibers 120A-120H and 122A-122H at an opposite end. Each FI/FO device 108A-108H is further optically coupled to a corresponding and respective optical transceiver 110A-110H (collectively "optical transceivers 110") and a corresponding I/O port 104. In this example, system 100 includes eight FI/FO devices 108A-108H and eight corresponding optical transceivers 110A-110H. Each transceiver 110A-110H includes a respective single-mode fiber transmitter TX-A through TX-H that carries and transmits a respective transmission optical data signal or forward transmission signal 112-T1a through 112-T1h and a single-mode fiber transmitter RX-A through RX-H that carries and receives a respective reverse transmission signal 114-R1a through 114R1h. As will be explained in more detail, FI/FO devices 108 are configured to couple a respective forward transmission signal of a single-core fiber with a reverse transmission signal of a separate single-core fiber. The combined signal is collimated and transmitted or injected onto cores of a multi-core fiber, which in this example may be a dual-core fiber. Multi-core fibers 106A-106H, which are coupled to corresponding and respective I/O ports 104A-104H of OCS 102, may transmit forward transmission signal to I/O ports. In this example, FI/FO devices 108A-108H are shown as individual or separate and spaced apart components or devices, but in other examples, they may be arranged in an array, such that collimators 126A-126D on forward transmission side and/or collimators 128A-128D on forward transmission side 116 are arranged together in a more closely spaced collimator lens array. Similarly collimators 126E-126H on reverse transmission side 118 and/or collimators 128E-128H on reverse transmission side 118 are arranged together in a more closely spaced collimator lens array. In this example, transceivers 110A-110H and single core fibers 120A-120H and 122A-122H may respectively comprise single-mode transceivers and single-mode fibers, but in other configurations, multimode transceivers and fibers, along with other multimode components can be implemented in the system.

OCS 102 may be a multi-port telecommunications network bridge device that is configured to interconnect with multi-core fibers 106. In this example, OCS 102 includes N pairs of optical links or transceivers (where N is an integer), which in this example, is also corresponds to the number N of I/O ports 104. There are X I/O (where X is an integer) ports on forward transmission side 116 of OCS 102 and Y I/O ports (where Y is an integer) on the reverse transmission side 118 of OCS 102. In this example, four I/O ports 104A-104D are aligned along forward transmission side 116 of OCS 102 and four I/O output ports 104E-104H are aligned along reverse transmission side 118, but as shown by the ellipsis (three circles vertically aligned), as well as numbered rows 1, 2, 3 and N, any number N of overall I/O ports may be implemented to accommodate various configurations and/or devices communicating through OCS 102.

Each multi-core fiber 106A-106H may be an optical element that includes a plurality of light output parts or light guiding cores that each have an optical axis that is parallel to the other axes. The multi-core fiber is a single strand of an optical fiber which contains multiple light guiding cores. The use of a multi-core fiber can help to increase bandwidth capacity and allow for the simultaneous transmission of multiple signals over the optical fiber. In this example, multi-core fiber 106A-106H may be a dual-core fiber, such that there are two cores extending along optical axes that are parallel to one another.

Multi-core fibers 106A-106H may each be directly coupled to a respective and corresponding one of the I/O ports 104A-104H of OCS 102. For example, connectors at respective ends of multi-core fiber 106A-106H can be used to couple multi-core fibers 106A-106H to respective ports 104A-104H, and in this example, connectors 130A2-130H2 are removably engaged with each of the respective ports 104A-104H. As shown, transmission signals 112-T2a through 112-T2h and reception signals 114-R1a through 114-R1h are transmitted physically separated at each I/O port 104. Each of the individual I/O ports 104A-104H may therefore receive both a respective forward transmission signal 112-T2a through 112-T2h and a respective reverse signal 114-R1a through 114-R1h from respective multi-core fiber 106A-106H. This provides for bi-directional communication through each of the I/O ports 104A-104H, while keeping forward transmission signals and reverse transmission signals physically separated at the connection with each I/O port. In this example, OCS 102 may be configured so that each of the I/O ports 104A-104H is switched simultaneously for each multi-core fiber to which it is connected.

FI/FO devices 108A-108H in system 100 may be configured to convert light pulses or signals transmitted through single-mode or single-core fibers into each core of a multi-core fiber, as well as convert light signals transmitted through a core-of a multi-core fiber into a core of a single-core fiber. As shown in this example, FI/FO devices 108A-108D are optically coupled to and positioned between forward transmission I/O ports 104A-104D and forward transceivers 110A-110D. FI/FO devices 108E-108H are also optically coupled to reverse transmission I/O ports 104E-104H and reverse transceivers 110E-110H.

Each optical transceiver 110A-110H in system 100 may generally transmit and receive data through fiber optic cables or fibers in the form of light pulses or forward transmission signals at high speeds. As shown, transceivers 110A-110H include optical transmitters TX-A through TX-H that are configured to convert an electric input or signal received from a network or other device into light signals. For example, each optical transceiver 110A-110H includes a respective optical transmitter TX-A through TX-H configured to transmit a transmission optical data signal or forward transmission signal 112-T1a through112-T1h, as well as an optical receiver RX-A through RX-H that receives a respective reception optical data signal or reverse transmission signal 114-R1a through 114-R1h. Transceivers 110A-110H may receive an electrical signal that its corresponding optical transmitter TX-A through TX-H will convert to a light or transmission signal that is injected into a single fiber, which in one example may be a single mode or single-core fiber. Optical transmitters TX-A through TX-H, according to aspects of the disclosure, may convert the electrical data signal into a light signal or forward transmission signal that is injected into a single fiber optic. Each receiver RX-A through RX-H may similarly be configured to convert light signals or reverse transmission signals transmitted through multi-core fibers 106A-106H back into an electrical signal.

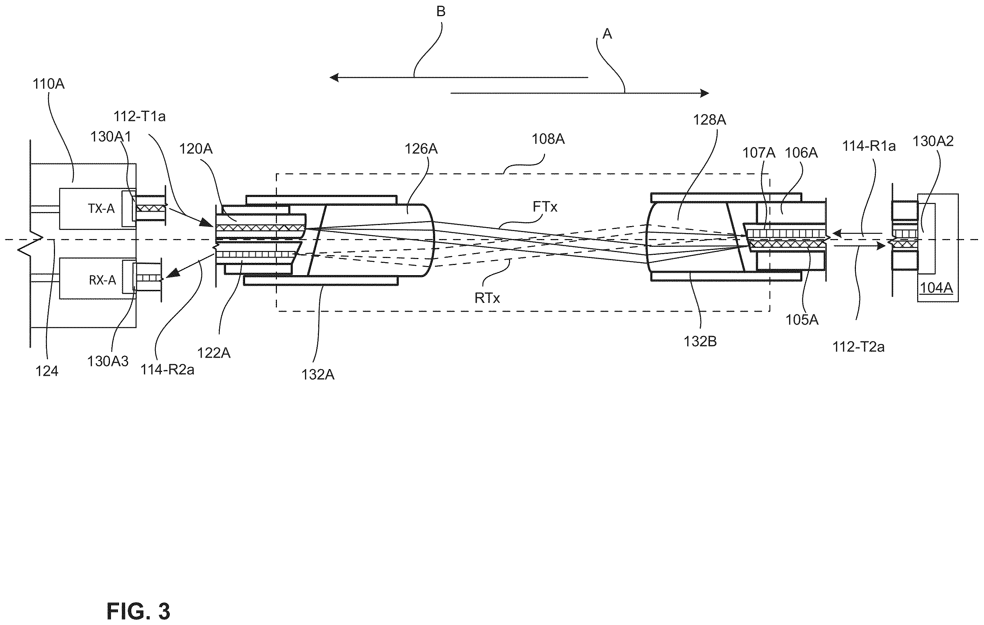

FIG. 3 depicts an enlarged view of transceiver 110A, FI/FO device 108A, and multi-core fiber 106A and illustrates additional details and components that are more easily viewed in the enlargement. Transceiver 110A is configured to convert an electric input from a network or other device into light signals. For example, transceiver 110A may receive an electrical signal that is converted to a light or transmission signal 112-T1a. Transceiver 110A transmits the transmission signal 112- T1a through a single-core fiber 120A that is coupled to transceiver 110A. Single-core fiber 120A may be a fiber optic cable having a single-core, which in this example transmits light signal or forward transmission signal 112-T1a in only one mode or pathway. Transceiver 110A may similarly receive a reverse transmission signal 114-R2a through a single-mode fiber or single-core fiber 122A that is coupled to transceiver 110A by connector 130A3. Single-core fiber 122A may also be a fiber optic cable, which in this example is designed to transmit the light signal in only one mode or pathway that is traveling in a direction opposite the direction that transmission signal 112-T1a travels. Transceiver 110A may be a single mode transceiver configured to both transmit and receive optical signals. But in other examples, one or more transceivers and the corresponding fibers may be multi-mode transceivers.

FI/FO device 108A can couple a light or forward transmission signal transmitted from transceiver 110A through a single-core fiber with a core of a multi-core fiber. FI/FO device 108A can also decouple light signals or reverse transmission signals transmitted from a core of multi-core fiber 106A to a transceiver, such that a reverse transmission signal transmitted from another core of a multi-core fiber can be coupled to a core of a single-core fiber. For example, as shown in FIG. 3, forward transmission signal 112-T1a can be transmitted through first single-core fiber 120A and light will be transmitted through single-core fiber 120A and FI/FO device 108A, which couples forward transmission signal 112-T1a with first core 105A of multi-core fiber 106A. The reverse can also occur. As shown, FI/FO device 108A can decouple reverse transmission signal 114-R1a that is transmitted through multi-core fiber 106A in a direction indicated by arrow B and forward transmission signal 112-T2a that is transmitted through multi-core fiber 106A in a direction indicated by arrow A into respective single-core fibers 120A, 122A. It is to be appreciated that forward transmission signal 112-T2a and reverse transmission signal 114-R1a may be simultaneously transmitted, but in other examples, the forward and reverse transmission signals 112-T2a and 114-R1a may be transmitted in series and/or be configured to both simultaneously or sequentially transmit signals. In this example, because there are only two single-mode or single core fibers 120A, 122A each carrying a light signal that is coupled with or decoupled from a light signal converted by a transceiver into a multi-core fiber, the multi-core fiber may be a dual-core fiber, but in other examples, there may be more than two single-mode fibers and corresponding cores of a multi-core fibers. For example, there may be four single-mode fibers corresponding to four cores of a multi-core fiber.

In this example, as shown in FIG. 3, FI/FO device 108A includes a first dual-fiber collimator 126A and a second multi-core fiber collimator 128A that are each respectively mounted on a multi-axis precision micropositioner 132A, 132B. Micropositioners 132A, 132B enable precise alignment of first dual-fiber collimator 126A and second multi-core fiber collimator 128A along optical axis 124. In some examples, maximum alignment can be achieved when the micropositioner is configured to translate, tilt, and/or rotate.

In this example, first dual fiber collimator 126A is coupled to two individual fibers: single fiber 120A and single fiber 122A. First dual-fiber collimator 126A couples together forward transmission signal 112-T1a transmitted through single fiber 120A from transmitter TX-A and reverse transmission signal 114-R2a being transmitted through single fiber 122A. First dual-fiber collimator 126 transmits the coupled signal through second multi-core fiber collimator 128A and converts the coupled signal to match the core pitch of the output multi-core fiber 106, which in this example may be a dual-core fiber. In one example, the magnification ratio between first dual-fiber collimator 126 and second multi-core fiber collimator 128A is the projection of the spacing between the two singular single-core fibers 120A, 122A, and the pitch between the two cores of the dual-core fiber 106A. Although various collimators can be implemented within FI/FO device 108A, first dual-fiber collimator 126 and second multi-fiber collimator 128A may have a different focal length. Thus, FI/FO device 108A can convert the two single-core fibers into one dual-core fiber and vice versa. In other examples, there may be multiple single-core fibers, such as three, four or more single-core fibers that will have light injected into a corresponding three or more cores of a multi-core fiber.

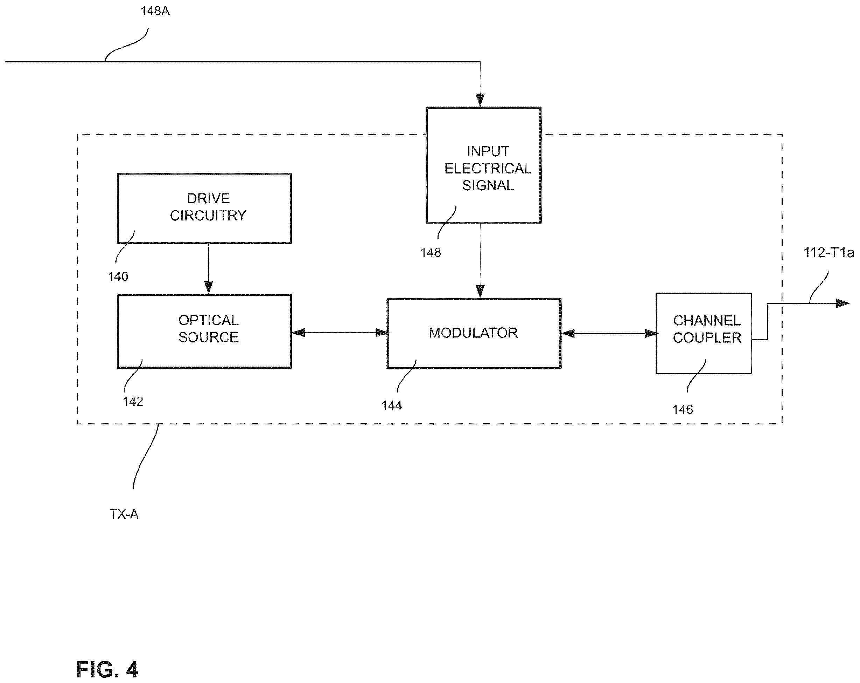

Optical transmitters for optical transceivers 100A-100H can take on various configurations to convert an electrical data signal to an optical signal. FIG. 4 depicts one example of an optical transmitter configuration that can be implemented within system 100, and may be the same transmitters TX-A through TX-H. As shown, optical transmitter TX-A includes drive circuitry 140, an optical source 142, a modulator 144, and a channel coupler 146. In other examples, optical transmitters TX may include additional and/or alternative components.

Drive circuitry 140 of optical transmitter TX-A may provide electrical power to optical source 142 and drive optical source 142 by modulating an injection current based upon input electrical signal 148 that may be transmitted by another system external to system 100 and/or within the same network. Input electrical signal 148 may be the electrical signal that carries data or information from a data source that is to be transmitted.

Optical source 142 is a light emitting source. Common types of light sources include light emitting diodes ("LEDs") and laser diodes ("LDs"). Types of LDs can include Fabry-Perot ("FP"), distributed feedback ("DFB"), and vertical-cavity surface-emitting lasers ("VCSEL"). Optical source 142 may be configured to emit light at a precise and pre-determined wavelength and within required power and efficiency parameters. In one example, optical source 142 may be an LD capable of outputting wavelengths ranging from about 600 nm to about 1800 nm, but in other examples, the wavelengths may be less than 600 nm or greater than 1800 nm.

Modulator 144 modulates the optical carrier wave received from optical source 142 and converts the electrical signal received from electrical input signal 148 into light pulses at a specific wavelength and intensity. For example, modulators 144 may modify the amplitude, phase, and/or polarization of a light wave to encode data. In other examples, a modulator may be unnecessary, such as in cases where an output generated by a semiconductor optical source can be modulated directly by varying the injection current.

Channel coupler 146 may be positioned at the end of modulator 144. Channel coupler 146 may be used to combine or separate optical signals from multiple channels and inject them into an optical fiber, which in this example is a single-core fiber, and which will carry a transmission signal 112-T1a.

Optical receivers for optical transceivers 100A-100H can take on various configurations to convert a received light signal to an electrical signal. Optical receivers RX-A through RX-H of transceiver 110 can receive a light signal and convert it back into an electrical signal. An example optical receiver may be coupled to single-core fiber 122A and can receive reverse transmission signal 114-R2a that is transmitted through single-core fiber 122A. Optical receiver RX-A converts reverse transmission signal 114-R2a into an electrical signal. Optical receiver RX-A can take on various configurations that will enable the conversion of a light signal to an electrical signal that contains the data or information.

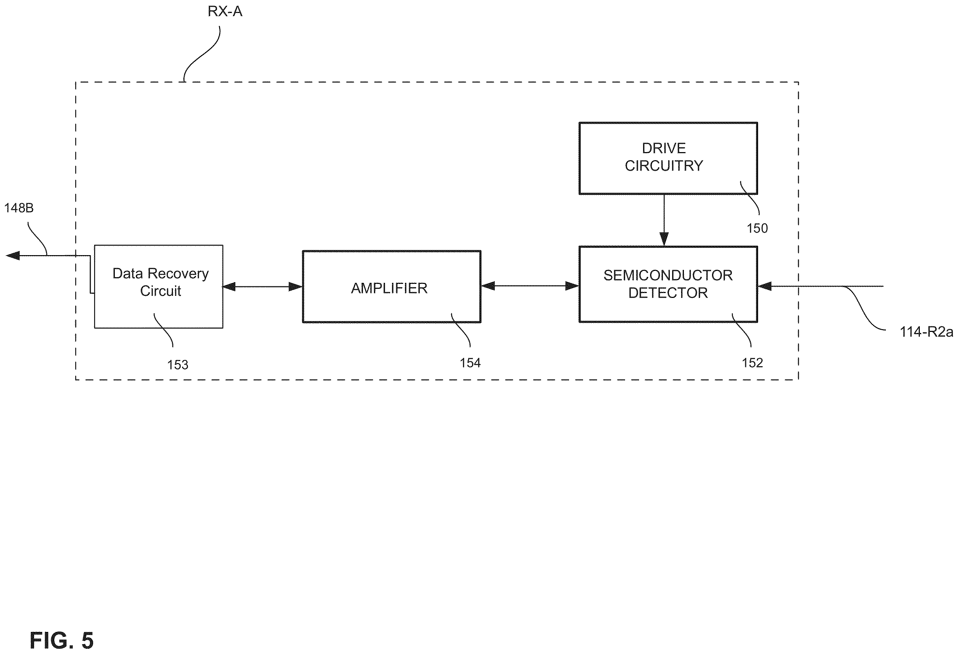

FIG. 5 illustrates one example of an optical receiver RX-A that includes drive circuitry 150, semiconductor detector 152, and amplifier 154. Semiconductor detectors 152 can include photodiodes or photodetectors that are configured to convert optical signals to electrical signals. When reverse transmission signal 114-R2a is received by optical receiver RX-A, semiconductor detector 152 can convert transmission signal 114-R2a into an electrical current. Amplifier 154 boosts the electrical current transmitted by semiconductor detector 152 and converts the electrical current into a usable electrical signal while introducing minimal noise. The data recovery circuit 153 can demodulate the electrical signal based on the protocol and formats of transmitter TX-A and output electrical signal 148B.

Any type of connector may be used to couple multi-core fibers 106A-106D to respective I/O ports 104A-104D, as well as to couple single-core fibers 120A-120H and 122A-122H to respective transceivers 110A-110H. The connectors may allow for the light signal from multi-core fiber 106A to travel through OCS 102, as well as receiving signal from multi-core fiber 106A to travel through single-core fiber 122A. Connectors may also allow for connection between transceiver 110A and single-core fibers 120A, 122A. Examples of connectors include, without limitation, a multi-fiber push on ("MPO"), multi-fiber termination push on, lucent connector ("LC"), and subscriber connector ("SC"), although any appropriate connector may be used. This can also be helpful to the extent that previous bi-directional optical systems required a specific type or custom connector at the I/O ports to try to minimize back reflections and/or other issues that may arise from implementation of prior bi-directional system, whereas in this example, any type of connector can be implemented.

It is to be appreciated that additional and/or alternative structural components and/or processes may be required of system 100, but such components are not required for an understanding of the operation of system 100 and would otherwise be understood by one skilled in the art.

It is to be appreciated that the prior and subsequent discussions of FIGS. 3-5, which include enlarged views of transceiver 110A, transmitter TX-A, receiver RX-A, FI/FO device 108A, I/O port 104A, and single-core fibers 120A, 122A and multi-core fiber 106A, may be the same for each of the corresponding transceivers 110B-119H, transmitters TX-B through TX-H, receivers RX-B through RX-H, FI/FO devices 108B-108H, I/O ports 104B-104H, and single-core fibers 120B-120H; 122B-122H and multi-core fibers 106B-106H throughout system 100, and will not be further described to avoid redundancy. In other examples, one or more of the transceivers 110A, FI/FO device 108A, I/O ports 104A, single-core fibers 120A, 122A and multi-core fibers 106A may differ from other corresponding transceivers (110A-110H), FI/FO devices 108A-108H, I/O ports 104A-104H, single-core fibers 120A-120H, 122A-122H and multi-core fibers 106B-106H in system 100.

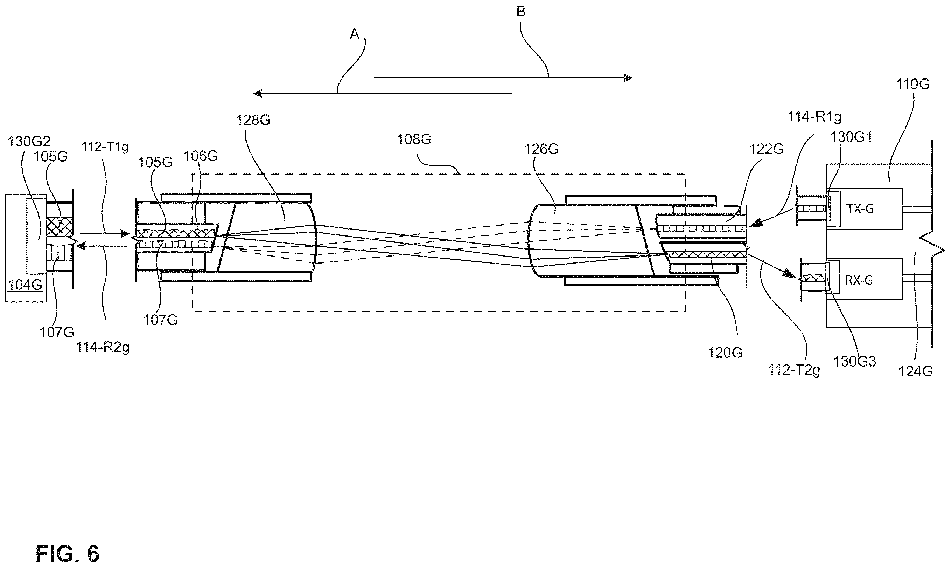

As will be described in more detail herein, Forward transmission signals transmitted from transceivers 110B-110D through corresponding single-core fibers 120B-120D, 122B-122D to corresponding I/O ports 104B-104D at forward transmission side 116 of OCS 102 can be coupled together and injected onto corresponding multi-core fibers 106A-106D in a similar manner as described in FIGS. 3-5, and vice versa. Additionally, components on reverse transmission side 118 mirror the configuration of components on forward transmission side 116, such that in use, as will be described in FIG. 6, the forward transmission signals transmitted from I/O ports 104E-104H on reverse transmission side 118 to a transceiver 110E-110H at reverse transmission side 118 can be coupled together or injected onto corresponding multi-core fiber 106E-106H and separated into corresponding single-core fibers 120E-120H, and 122E-122H in the reverse order that the forward transmission signal is transmitted from transceivers 110A-110D to corresponding I/O ports 104A-104D. This further allows for a reverse transmission signal transmitted from one of the transceivers 110E-110H on reverse transmission side toward corresponding I/O ports 104E-104H to couple single-core fibers 120E-120H and 122E-122H to corresponding multi-core fibers 106E-106H (and vice versa) in the same way that the forward transmission signal is transmitted from one of the transceivers 110A-110D on forward transmission side 116 to one of the I/O ports 104E-104H on reverse transmission side 118.

With reference back to FIGS. 2-3, in one example illustrating communication between a pair of transceivers on opposite ends of OCS 102 with attached multi-core fibers, an electrical signal will be received by transceiver 110A, which is coupled to single-core fiber 120A. In this example, transceiver 110A and single-core fiber 120A may be coupled by connector 130A1. Transmitter TX-A can convert the incoming electrical signal into light signal or forward transmission signal 112-T1a, which transmitter TX-A transmits through single-core fiber 120A. Forward transmission signal 112-T1a will be collimated through first dual-fiber collimator 126A and second multi-core fiber collimator 128A of FI/FO device 108A. Light from forward transmission signal 112-T1a can be demagnified as it passes through first dual fiber collimator 126A and second multi-core fiber collimator 128A, which in this example, can be accomplished by using two micro-lens collimators having different focal lengths. Forward transmission signal 112-T1a can be focused onto and coupled or injected into a core 105A of multi-core fiber 106A, based on precise alignment of first and second dual-core fiber collimators 126A, 128A along optical axis 124 (FIG. 3). This allows for coupling of forward transmission signal 112-T1a with core 105A of multi-core fiber 106A. Multi-core fiber 106A may be coupled at its other end to I/O port 104A through connector 130A2. The now collimated forward transmission signal 112-T2a will be transmitted through I/O port 104A. Transmission signal 112-T2a will be processed through OCS 102. As previously discussed, various technologies can be implemented to form OCS 102, such as a Micro-Electromechanical System ("MEMS"), piezoelectric actuator technology, robotic technology, liquid crystal technology, and/or other structures or methods that can provide optical switching along an optical path between two ports of OCS 102, examples some of which will be described in greater detail herein.

Forward transmission signal 112-T2a may be transmitted from I/O port 104A, through OCS 102, and to I/O port 104G. As shown in FIG. 6, connector 130G2 of multi-core fiber 106G may be coupled to I/O port 104G on transmission return side 118 of OCS 102. Forward transmission signal 112-T1g may be transmitted from I/O port 104G to multi-core fiber 106G. In one example, transmission signal 112-T1g is injected onto core 105G of multi-core fiber 106G. As previously described, a forward transmission signal 112-T1g and reverse transmission signal 114-R2g may be simultaneously transmitted through I/O port 104G. Forward transmission signal 112-T1g will be transmitted through multi-fiber collimator 128G and then dual-fiber collimator 126G. When forward transmission signal 112-T1g exits multi-fiber collimator 128G as forward transmission signal 112-T2g, forward transmission signal 112-T2g is separated or decoupled from reverse transmission signal 114-R1g. In one example, the lens of multi-core fiber collimator 128G focuses the light of transmission signal 112-T1g onto a single-core fiber 120G and injects forward transmission signal 112-T1g onto single-core fiber 120G. Single-core fiber 120G may be coupled to receiver RX-G of transceiver 110G. As shown, the collimated forward transmission signal 112-T2g will be transmitted to receiver RX-G through single-core fiber 120G.

The return optical path can follow a similar route in the reverse. With reference still to FIG. 6, an electrical signal from transceiver 110G can be converted to an optical signal and transmitted to transceiver 110A along the same pathway. As shown, reverse transmission signal 114-R1g will be transmitted through single fiber 122G, which is coupled to transmitter TX-G of transceiver 110G. Reverse transmission signal 114-R1g is transmitted first through dual-fiber collimator 126G and then multi-core fiber collimator 128G of FI/FO device 108G and injected onto a core 107G of multi-core fiber 106G. Multi-core fiber 106G is coupled to connector 130G2 at I/O port 104G and the collimated reverse transmission signal 114-R2g will be transmitted through I/O port 104G and into OCS 102. Signal 114-R2g will be processed and transmitted through port 104G and OCS 102. At the same or similar time, forward transmission signal 112-T1a may be transmitted through port 104G, illustrated as forward signal 112T1g. Signal 114-R1g will be injected onto core 107G of muti-core fiber 106G.

Referring back to FIGS. 2 and 3, reverse transmission signal 114-R1a will be transmitted from port 104A through multi-core fiber 106A and decoupled from forward transmission signal 112-T2a. In this example, reverse transmission signal 114-R1a will be collimated through multi-core fiber collimators 128A and dual-core fiber collimator 128A and focused onto single-core fiber 122A, which is coupled to connector 130A3 of receiver RX-A. This effectively couples multi-core fiber 106A with single-core fiber 122A, and in this example, core 107A of multi-core fiber 106A is optically coupled with single fiber 122A. Reverse transmission signal 114-R2a is transmitted through single-core fiber 122A to receiver RX-A, where reverse transmission signal 114-R2a will be converted back to an electrical signal. It is to be appreciated that in all of the examples that disclosed herein, forward transmission signals and reverse transmission signals transmitted along an optical pathway in system 100 may be similar signals that carry the same or similar data, but may be modified and/or transformed as they are transmitted and collimated along the optical path through single-core fibers, multi-core fibers, collimators, OCS, and any other components through which the light signal is transmitted. The signal is nonetheless identified with different reference numerals for ease of discussion. Additionally, although the optical pathway between two transceivers has been described as extending between two transceivers on opposite sides of OCS 102, in other examples or implementations, one or more pairs of transceivers sharing an optical path may alternatively or additionally be positioned on a same side of OCS 102.

System 100 that implements an OCS 102 with multi-core fibers 106A-106H can significantly reduce multi-path interference suffered by traditional bidirectional systems that may use circulators or other devices to combine the signals along a single path prior to connection with a switch port. OCS 102 further eliminates the need for two separate unidirectional ports (*i.e.,* a first port for forward direction transmission and a second port for the reverse direction transmission), and replaces them with a single I/O port to accommodate each forward and reverse transmission. The introduction of a multi-core fiber connection at OCS 102 creates a number M of fiber inputs at OCS 102, while requiring only a number N of ports, where N corresponds to the number of pairs of optical links or transceivers coupled to OCS 102. In the disclosed embodiments, OCS 102 has a doubled switch capacity, similar manufacturability, and control complexity, where an NxN switch is now capable of being expanded as a (MxN) x (MxN) switch (where M is an integer indicating the number of cores in an individual multi-core fiber, which in turn represents the number of inputs at a given switch input/output). This means that only N switch ports are now required for the number M of cores in an individual multi-core fiber to which a switch port is connected. In this example, where the multi-core fiber is a dual-core fiber and the number N of I/O ports on forward transmission side 116 is 4 and the number N of I/O ports on reverse transmission side 118 is also 4, such switch will be a (2x4) to (2x4) switch, where there are two inputs at each of the four switch ports or I/O ports 104A-104D on the forward transmission side 116 of OCS 102 and two inputs at each of the four switch ports or I/O ports 104E-104H on the reverse transmission side 118 of OCS 102. This can be accomplished without increasing the switch form factor or its control algorithm complexity.

The use of a multi-core fiber 106 in optical system 100 provides for an improved bidirectional optical path, where two optical signals traveling in different directions may pass through each I/O port. Each I/O port 104 is therefore configured to receive both forward transmission signals FTx and reverse transmission signals RTx. As a result, an N optical radix (N pairs of Tx/Rx transmissions signals) with only N switch ports and N I/O fibers can be achieved. This effectively doubles switch capacity under the same hardware form factor, similar manufacturability, and control complexity, as compared to a traditional system that does not implement a bidirectional optical path at each port. For example, the new configuration no longer requires 2xN switch ports and 2xN fibers as in a duplex fiber optic system or 2 NxN switches to handle separate forward/reverse transmissions. This configuration also eliminates back reflections and cross-talk that are present in existing bidirectional systems. That is, in addition to other improvements, incorporating multi-core fibers into optical communication systems can reduce the number of I/O ports required for the OCS because the transmission and reception signals can now both be received at each I/O port. The switch is therefore expanded to an (m x N) x (m x N) switch, where m is the number of fibers in the multi-core fiber and N is the number of switch I/O ports.

OCS 102 can take on various configurations to provide an optical connection or path between a pair of transceivers. In one example, OCS 102 may be a Micro-Electromechanical System ("MEMS") optical switch, in which mirrors etched on a silicon chip are tilted or angled to redirect a light signal from a first fiber at a first port of OCS 102 to a second fiber at a second port of OCS 102. In one example, the mirror tilt angle can be manipulated through electrostatic force or electromagnetic force, so that the mirror may be rotated to change the propagation direction of the light signal and to determine the direction of the light signal or transmission signal.

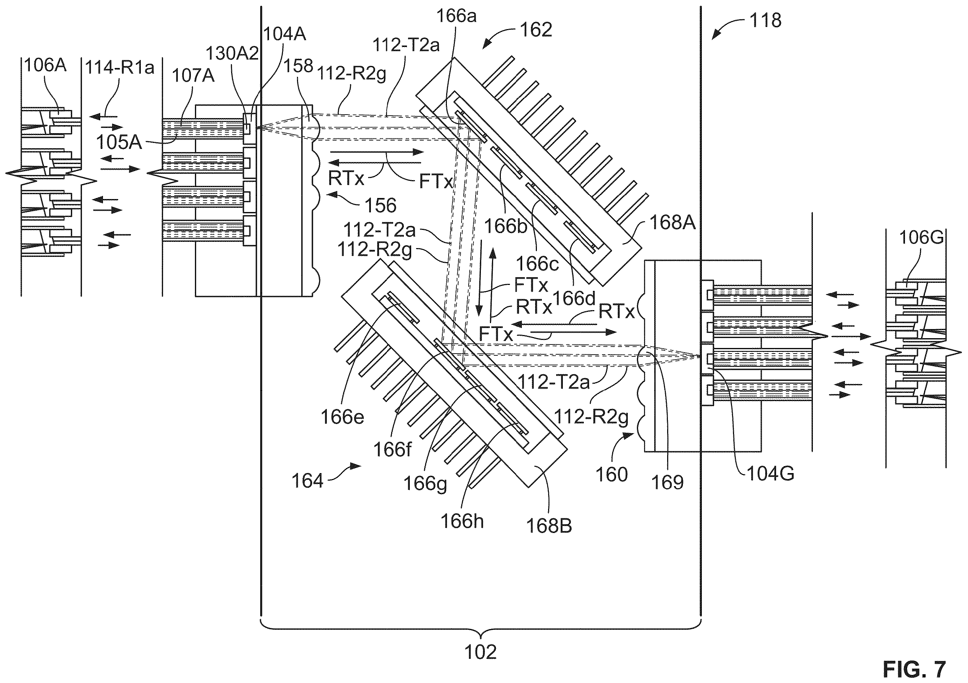

FIG. 7 illustrates an example schematic OCS that can be incorporated into system 100. In this example, OCS 102 may be a MEMS optical switch, and in a specific example, OCS 102 may be a MEMS 2D switch, but in other examples, a 3D switch can be implemented. OCS 102 may include a first collimator lens array 156, a second collimator lens array 160, a first packaged MEMS mirror array 162, and a second packaged MEMS mirror array 164. In this example, first and second collimator lens arrays 156, 160 are 2D arrays that in some examples, may be coupled directly to the multi-core fiber. For example, each fiber of the multi-core fiber 106A may be rotated and keyed during collimation manufacturing, with the assistance of an imaging system, and fiber maneuver fixtures. In this example, a forward transmission signal is schematically represented by short-dash-short-dash broken lines, with the reverse transmission signals schematically represented by long-dash-short-dash broken lines.

First and second packaged MEMS mirror arrays 162, 164 may be groups of microscopic and individually controllable mirrors 166a, 166b, 166c, 166d, 166e, 166f, 166g, 166h (collectively "mirrors 166") that are manufactured using MEMS technology. Mirrors 166 may be configured so that they may be moved with angular precision. For example, mirrors 166 may be moved by the action of electrostatic force or electromagnetic force. In this example, mirrors 166a-166d may be further integrated into a housing or chip package 168A and mirrors 166e-166h may be further integrated into chip package or housing 168B and hermetically sealed.

During operation, forward transmission signal 112-T2a and reverse transmission signal 114-R1a (FIG. 2) are transmitted through I/O port 104A of OCS 102. Forward transmission signal 112-T2a is transmitted through connector 130A2 that couples port 104A with core 105A and core 107A of multi-core fiber 106A. When forward transmission signal 112-T2a is transmitted to and enters OCS 102, forward transmission signal 112-T2A will be directed through port 104A and through lenslet 158 of first lens array 156. Forward transmission signal 112-T2a is collimated, and projected to first packaged MEMS mirror array 162. First mirror 166a of first packaged mirror array 162 directs light of forward transmission signal 112-T2a onto a second mirror 166f of second packaged MEMS mirror array 164. Second mirror 166f can select the I/O port to which forward transmission signal 112-T2a will exit OCS 102. In this example, the output port is I/O port 104G disposed at reverse transmission side 118 of OCS 102. Second mirror 166f deflects forward transmission signal 112-T2a and selects the output port through which the light will be transmitted. In this example, second mirror 166f deflects forward transmission signal 112-T2a through a single lenslet 169 of second collimator lens array 160 toward and through port 104G. Collimated light signal is injected as forward transmission signal 112-T1g to a fiber core of a multi-core fiber at transmission reverse side 118, which in this example is core 105G of multi-core fiber 106G.

As shown, a return or reverse transmission signal 114-R1g may also be deflected back through I/O port 104G and I/O port 104A and, such that the optical path of reverse transmission signal 114-R1g follows the optical path of forward transmission signal Tx 112-T2a. As shown, the same first mirror 166a of first packaged mirror array 162 and the same second mirror 166f of second packaged mirror array 164 may be used to direct reverse transmission signal 114-R1g from I/O port 104G to I/O port 104A. This configuration reduces the number of overall mirrors required in the system since both the forward and reverse transmission signals 112-T2a, 114-R1g can be reflected onto the same mirrors. This is in contrast to prior configurations in which a mirror is required for each forward transmission signal and a separate mirror is required for each reverse transmission signal. This can reduce the number of required mirrors by half, as compared to optical communication systems that use a single-core fiber switch and that require a port for every core fiber, as well as a mirror for every core fiber.

In this example, although not shown, an optical transceiver 110A-110H, FI/FO device 108A-108H, and multi-core fiber 106A-106H are coupled to a corresponding one of the I/O ports 104A-104H. In other examples, not every I/O port 104A-104H of the OCS 102 is coupled to one of the transceivers 110A-110H, FI/FO devices 108A-108H, and multi-core fibers 106A-106H, although at least one pair of these components (*i.e.,* two transceivers, two FI/FO devices, and two muti-core fibers) is coupled to a set of I/O ports 104 so that OCS 102 can route signals from one member of the pair to the other.

In other examples, multiple beams from fiber cores in system 100 may also be collimated by other lenslets 158 in first and/or second collimator lens arrays 156, 160. Additionally, various other MEMS arrays and configurations may be implemented. It is to be further appreciated that the transceivers are shown aligned with and in close proximity to I/O ports, but it is to be appreciated that the transceivers and FI/FO devices disclosed herein can be positioned at any distance away from I/O ports to which the transceiver and FI/FO device are connected through the use of fibers or fiber optic cables. For example, transceivers and/or FI/FO devices can be positioned miles away from I/O ports to which they are coupled, as well as each other. The varying distance is represented by break lines on the fibers that extend along the optical path.

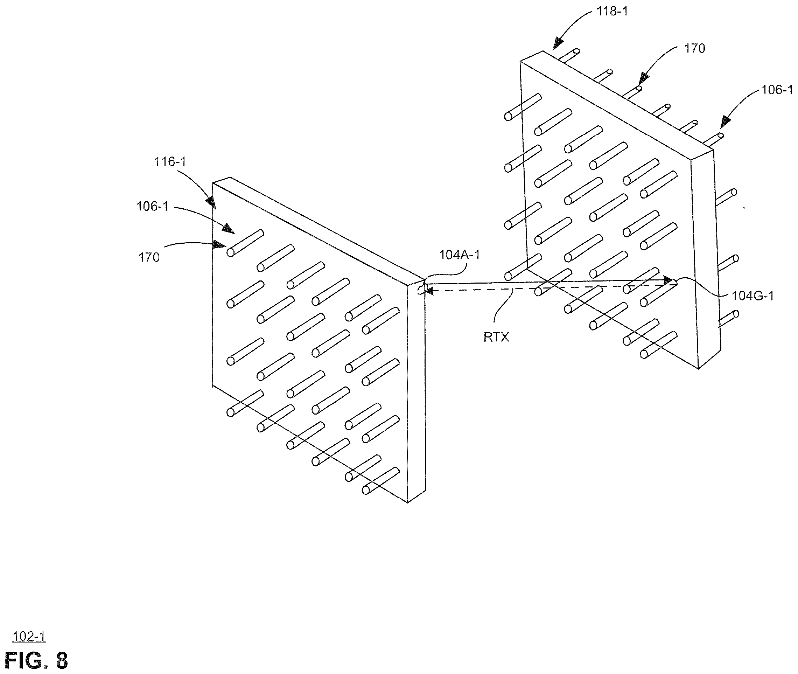

FIG. 8 provides another example optical circuit switch that can be implemented within system 100. OCS 102-1 may be a piezoelectric-actuated switch that utilizes a piezoelectric effect to generate an electrical signal with the application of mechanical pressure. In one example, OCS 102-1 is a piezoelectric switch comprised of a piezoelectric material that may include, without limitation, quartz or certain ceramics, positioned between two metal plates. Pressure applied to OCS 102-1 (such as by the application of voltage) causes deformation of the piezoelectric material, which in turn creates an electric charge that accumulates on the surface of the piezoelectric material, where the amount of charge is proportional to the magnitude of the force. The electric charge may be detected by the switch, which is triggered to perform a specific action.

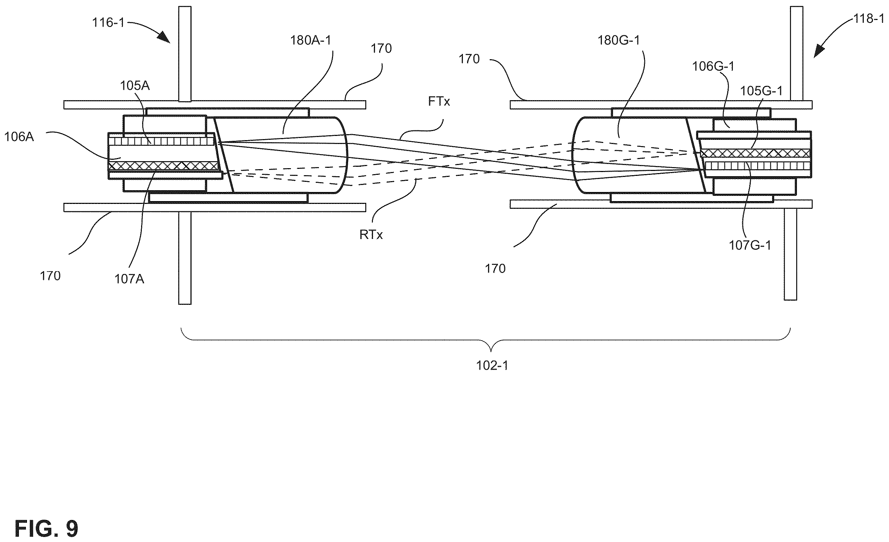

In one simplified example, connections between multi-core fibers 106-1 on forward transmission side 116-1 of OCS 102-1 and multi-core fibers 106-1 on reverse side 118-1 of OCS 102-1 can be created using compact piezoelectric actuators 170 to align collimated beams of light from opposing arrays of input and output fibers. Each actuator 170 on forward transmission side 116-1 of OCS 102-1 may be coupled to a first optical port 104A-1 and each actuator 170 disposed at reverse transmission side 118-1 of OCS 102-1 may be coupled to a second optical port 104G-1. When OCS 102-1 is implemented in an optical communication system, such as system 100, collimators at the forward transmission side 116-1 of OCS 102-1 may be a second set of collimators that are coupled with respective actuators 170 positioned at or near an interior portion of forward transmission side 116-1 of OCS 102-1. For example, as also shown in FIG. 9, a forward transmission collimator 180A-1 may be positioned at, near, or adjacent an interior portion of forward transmission side 116-1 of OCS 102-1 and coupled to first optical port 104A-1 (FIG. 9) and actuator 170. Collimator 180A-1 may be directly coupled to multi-core fiber 106A. Collimator 180G-1 may be positioned at, near, or adjacent interior portion of reverse transmission side 118-1 of OCS 102-1 and actuator 170. Actuators 170 may include sensors that can be used to adjust fibers in a multi-core fiber 106 so that each core of the multi-core fiber is properly positioned and can be directed toward the desired port when collimated. For example, collimator 180A-1 may collimate a forward transmission signal from core 105A of multi-core fiber 106A and direct the signal along optical forward transmission path FTx to collimator 180G-1 positioned at reverse transmission side 118-1 of OCS 102-1. Collimator 180G-1 will receive forward transmission signal 112-T2a and couple the forward signal with core 105G-1 of multi-core fiber 106G-1. Collimators 180A-1 and 180G-1 may be multi-core collimators each configured to collimate light from one multi-core fiber to another multi-core fiber. As shown, a reverse transmission signal may also be transmitted along a reverse optical path RTx from collimator 180G-1 at second port 104G-1 (FIG. 9) of OCS 102-1 to collimator 180A-1 at first port (FIG. 9) of OCS 102-1, as shown by the dashed lines. Use of piezoelectric actuators can minimize loss, distortion, or interference between paths.

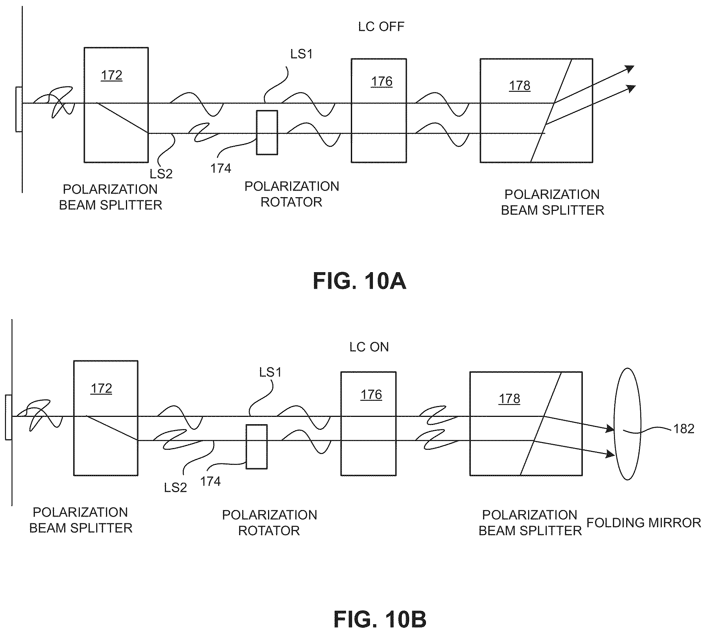

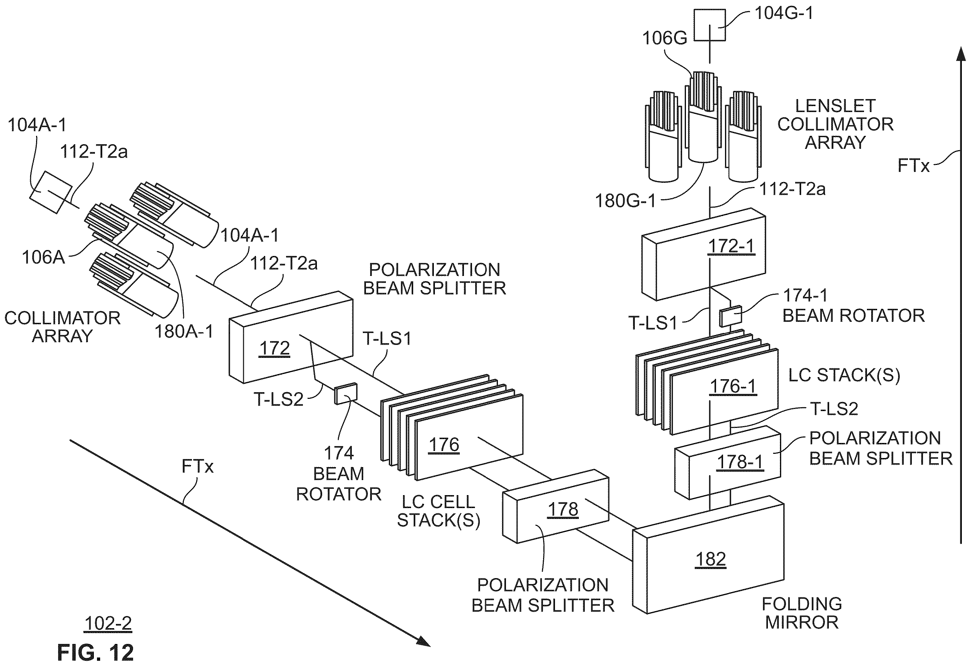

As previously discussed, according to aspects of the disclosure, other types of switches can be implemented with a multi-core fiber at the switch port. FIGS. 10A-10B schematically illustrate partial components and operation of a simplified optical circuit switch 102-2, such as, for example OCS 102-2 shown in FIGS. 12-13, which can be implemented in a Liquid Crystal (LC) based 2D optical circuit switch, such as an LC switch . With reference first to FIG. 10A, an example portion 103 of OCS switch 102-2 may be configured to receive incoming randomly polarized light signals and separate the light signals into two orthogonal polarizations. For example, a light signal or forward transmission signal may be split into a first polarized light signal LS1 and second polarized light signal LS2 through a first polarization beam splitter ("PBS") 172. Second polarized light signal LS2 may be rotated to the same polarization state of the first polarization path via a polarization rotator 174. LC cell 176 may be a small chamber filled with liquid crystal material that is used to control the polarization state of transmitted light by applying a control voltage. In some examples, LC cell 176 may include several LC cells or stacks of LC cells that are configured to each manipulate the direction of forward and reverse light transmission signals. LC cell 176 may be followed by polarization components such as another polarization beam splitter 178, which changes the light path based on the polarization of the light signal.

The on/off state of the LC cell 176 switches the light to different ports. LC cell 176 can modify the polarization of the light passing through LC cell 176, which in combination with a PBS 178 directs the light to different fiber optic ports. LC cell 176 switches the route of the light signal to the desired destination based on the LC cell's state. In one example, when the LC voltage is "off," the beam is not rotated as it passes through LC cell 176 and PBS 178, and will not be directed toward any port (or alternatively directed to a specific location pre-determined by the user), as shown by the direction of the arrows exiting PBS 178. But when the LC voltage is "on," as shown in FIG. 10B, the beam is rotated and may be directed to a second port or in this example, an intermediate folding mirror 182, which will allow for redirection of a forward transmission signal to a second port, as well as redirection of a reverse transmission signal from second port back to the first port along the optical path.

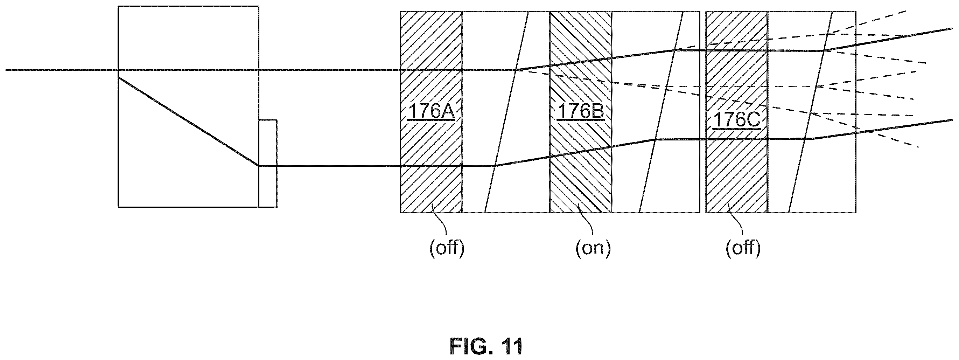

As shown in FIG. 11, the LC cell 176 may also be an LC stack, with two or more layers of LC cells. For example, as shown, LC cell 176, is a stacked cell with a first LC cell layer 176A, a second LC layer 176B, and a third LC layer 176C. As shown, the change in direction of light signal is modified based upon whether the LC cell layer is "on" or "off." Implementation of OCS 102-2 can further help to reduce extra LC transmission loss with the addition of LC layers.

As depicted in FIG. 12, in this example, OCS 102-2 is an LC switch that can be implemented within system 100. A collimator lens array may be provided within OCS 102-2, such that in some examples, there is a collimator lenslet for each I/O port of OCS 102-2. As shown at port 104A-1, collimator 180A-1 of a collimator lens array is shown coupled to multi-core fiber 106A. As noted, collimator 180A-1 is a separate collimator from the collimators used in FI/FO device 108A previously discussed herein, such that in this example, there will be two multi-core collimators along a forward transmission path FTx of OCS 102-2. OCS 102-2 may be configured to receive incoming forward transmission signal 112-T2a. PBS 172 will separate forward transmission signal 112-T2a into two orthogonal polarizations. For example, a light signal or forward transmission signal 112-T2a may be split into a first polarized light signal T-LS1 and second polarized light signal T-LS2 through a first polarization beam splitter 172. Second polarized light signal T-LS2 may be rotated to the same polarization state of the first polarization path via a polarization rotator 174. One or more LC cells 176 can control the polarization state of transmitted light by applying a control voltage.

When the LC cell is "on," LC cell 176 switches the light to different ports. LC cell 176 can modify the polarization of the light passing through LC cell 176, which in combination with a PBS effectively directs the light to different fiber optic ports. When the LC voltage is "on," the second polarized light signal T-LS2 is rotated and may be directed to polarization beam splitter 178, which in turn directs polarized light signals T-LS1 and T-LS2 to folding mirror 182. Folding mirror 182 may be a single mirror or a mirror array configured to redirect polarized light signals T-LS1 and T-LS2 to a second port, which in this example may be port 104G-1. As shown, the reverse process occurs. The light signals T-LS1, T-LS2 are redirected to port 104G-1 through PBS 178-1, LC stacks 176-1, a beam rotator 174-1, which couples the polarized light signals T-LS1 and T-LS2 back together through PBS 172-1. Forward transmission signal 112-T2A is then transmitted through collimator 180G-1, through port 104G-1 and again injected onto a core 105G of multi-core fiber 106G. The signal can then be collimated through FI/FO device 108G (FIG. 2).

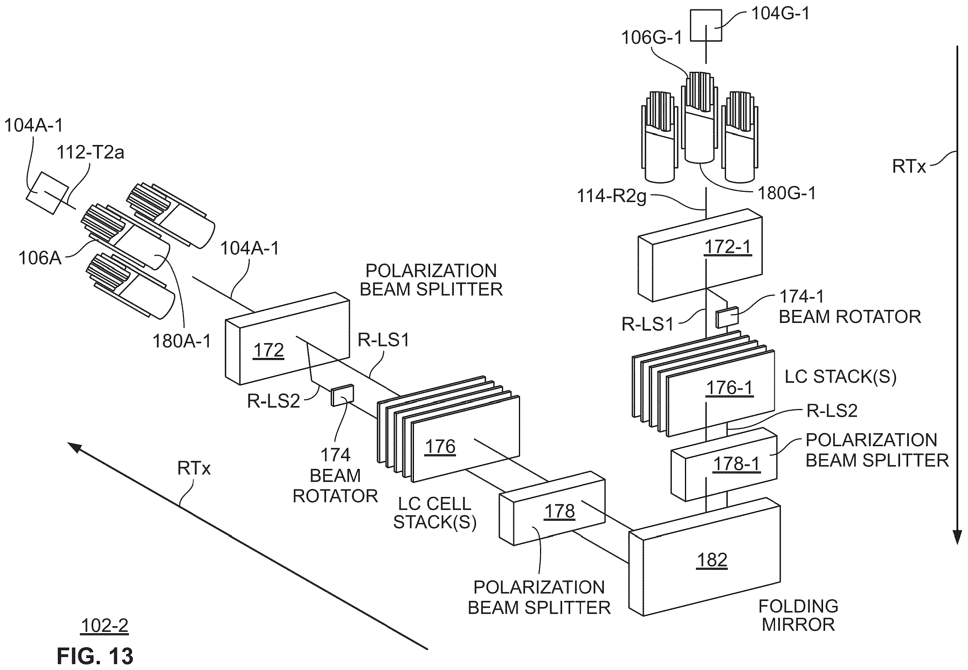

OCS 102-2 can also transmit a reverse transmission signal along a reverse optical path RTx that originates from port 104G-1 and is transmitted to port 104A-1, but is otherwise the reverse path of forward transmission signal path FTx. The process will be identical, except that the light signal will be traveling in the opposite direction. For example, as shown in FIG. 13, reverse transmission signal 114-R2g (see also FIG. 2) is transmitted through multi-core fiber 106G. Reverse transmission signal 114-R2g will be split into two orthogonal polarizations. For example, reverse transmission signal 114-R2g will be split into a first reverse polarized light signal R-LS1 and second reverse polarized light signal R-LS2 through polarization beam splitter 172-1. Second polarized light signal R-LS2 may be rotated to the same polarization state of the first polarization path via a polarization rotator 174-1 One or more LC cells 176-1 can control the polarization state of transmitted light by applying a control voltage.

When the LC cell is "on," LC cell 176-1 modifies the polarization of the light or forward transmission signal passing through LC cell 176-1, which in combination with a PBS 178-1 effectively directs the light to different fiber optic ports. As shown, polarized lights are directed to folding mirror 182. Folding mirror 182 may be a single mirror or a mirror array configured to redirect polarized light signals R-LS1 and R-LS2 to a second port, which in this example may be port 104A-1. The reverse process can then occur. Polarized reverse light signals R-LS1, R-LS2 are redirected to port 104A-1 through PBS 178 and LC stacks 176. Reverse transmission signal R-LS1 is rotated back through polarization rotator 174, and the two polarized reverse light signals R-LS1, R-LS2 are redirected through PBS 172, which rejoins or couples together the two polarized reverse light signals R-LS1, R-LS2. Reverse transmission signal 114-R2g is then transmitted through collimator 180A-1 and again injected onto a core 107A of multi-core fiber 106A as reverse transmission signal 114-R1a. The reverse transmission signal can further be collimated through FI/FO device 108G (FIG. 2) and transmitted to transceiver 110A.

Use of a multi-core fiber in connection with an LC switch can reduce the overall size of the LC-based 2D optical switch, as the forward and reverse transmission signals can share the same port. The number of collimators in the system is therefore reduced, as a separate collimator is not required for each input and output. It is to be appreciated that other types of optical circuit switches may also be implemented within system 100. For example, robotic switches can be implemented.

According to another aspect of the disclosure, a robotic switch is disclosed that can be used in an optical system, including, without limitation, optical communication system 100 previously described herein. Use of a robotic switch or robotic device as part of the optical circuit switch can replace human manual fiber patching in optical cross-connection with robotics. It automates the process of moving fiber connectors from one port to another.

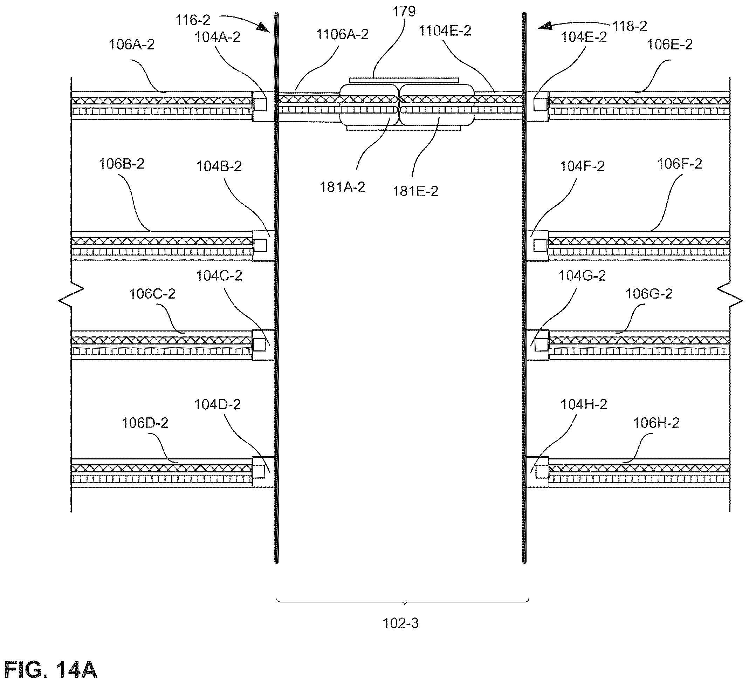

FIG. 14A illustrates OCS 102-3, which is one example of a robotic switch. As in previous examples, OCS 102-3 includes multiple I/O ports 104A-2, 104B-2, 104C-2, 104D-2 on forward transmission side 116-2 of OCS 102-3 with corresponding multi-core fibers 106A-2, 106B-2, 106C-2, 106D-2. Multiple I/O ports 104E-2, 104F-2, 104G-2, 104H-2 with corresponding multi-core fibers 106E-2, 106F-2, 106G-2, 106H-2 may also be disposed at reverse transmission side 118-2 of OCS-102. As in the previous examples, OCS 102-3 may be implemented in a system that further includes one FI/FO device and one transceiver that corresponds with one port.

OCS 102-3 can include and/or implement a robotic device or apparatus to physically connect multi-core fibers at one port of OCS 102-3 with multi-core fibers at another port of OCS 102-2. In one example, a robotic device can couple two connectors of multi-core fibers of OCS 102-3 extending from I/O ports into OCS 102-3, such as coupling a connector extending from one side of OCS 102-3 with a connector extending from an opposed side of OCS 102-3. For example, as shown, forward side multi-core fiber 106A-2 may be coupled to port 104A-2 at one end and include a connector 181A-2 at a second end. Forward transmission side multi-core fiber 106A-2 may extend into and within OCS 102-3 from port 104A-2. Reverse transmission side multi-core fiber 106E-2 may similarly extend into and within OCS-3 from port 104E-2. Reverse transmission side multi-core fiber 106E-2 may be coupled to I/O port 104E-2 at one end and have a connector 181E-2. Connectors 181A-2 , 181E-2 can be configured to couple with one another. For example, connectors 181A-2, 181E-2 may be configured to interlock with one another, such as using male and female connections, but any type of interconnection can be implemented. A mating device 179, as shown, for example in FIG. 14A, can additionally or alternatively be used to further secure forward and reverse transmission multi-core fibers 106A-2, 106E-2. In one example, mating device 179 may be a sleeve or housing that extends around some or all of the outer perimeter of forward and reverse transmission side multi-core fibers.

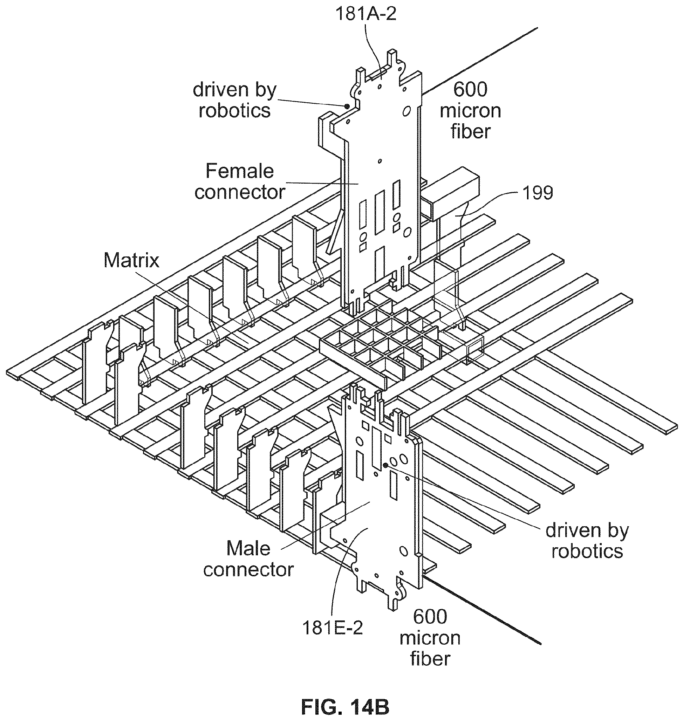

FIG. 14B illustrates an example operation of a robotic device configuration that can connect or join connectors within OCS 102-3, but without showing the multi-core fibers. As shown, connector 181A-2 of forward transmission multi-core fiber 106A-2 may be coupled with connector 181E-2 of reverse transmission multi-core fiber 106E-2 by a robotic device. The robotic device can be configured to provide for a precise connection between cores of forward transmission multi-core fiber 106A-2 with cores of reverse transmission multi-core fiber 1106E-2 when joining connectors 181A-2 and 181E-2 together. As shown, OCS 102-3 can be configured so that connector 181E-2 moves toward connector 181E-2, or connector 181E-2 moves toward 181A-2, or both connectors 181A-2, 181E-2 move toward one another. In other examples, OCS 102-3 may further include one or more arms that move connectors in OCS 102-3 together. For example, a robotic arm 199 can be configured to take one end of forward transmission multi-core fiber 106A and connect it to an end of reverse transmission multi-core fiber 1106R within OCS 102-3. In such example, robotic arm 199 can take connector 181A-2 of forward multi-core fiber 106A-2 and connect it with connector 181E-2 of reverse transmission multi-core fiber 1106A. As shown, robotic arm 199 may move connector 181A-2 towards connector 181E-2. In other examples, more than one robotic mechanism or arm can be used to make the connection, such as a first robotic arm that contacts forward transmission multi-core fiber 106A-2 and brings forward transmission multi-core fiber 106A-2 closer in proximity to reverse transmission multi-core fiber 106E-2 that is being moved by a second robotic arm. Further, if needed, a third robotic arm or device can be used to attach the mating device 179 to forward and reverse transmission multi-core fibers 106A-2, 106E-2. In some examples, the robotic arm may be configured to identify the correct port to which a fiber in an optic system 100 should be connected.

Although not shown, each of the remaining ports 104B-2, 104C-2, 104D-2, 104F-2, 104G-2, and 104H-2 may also be directly connected to one another with forward and reverse transmission multi-core fibers that extend from I/O ports of OCS 102-2. Additionally, I/O ports may be coupled to one another on opposite sides of OCS 102-2, but in other examples, I/O ports on a same side of OCS-102 may be implemented.

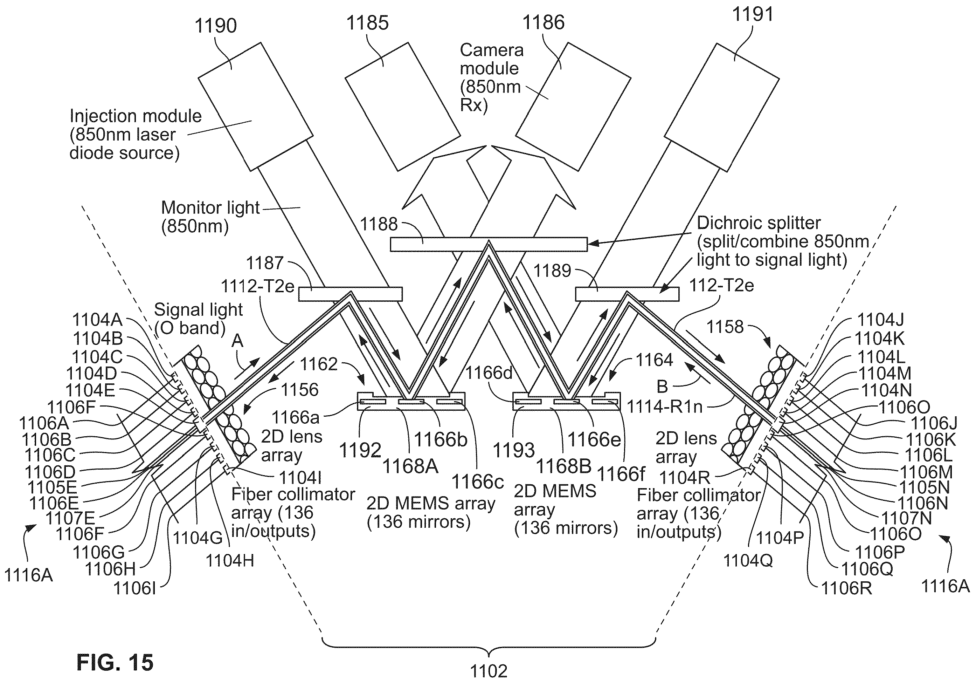

FIG. 15 illustrates another example schematic OCS with multi-core fibers that can be incorporated into an optical communication system. OCS 1102 may be a MEMS optical circuit switch with multi-core fibers, and in this example, OCS 1102 may be a MEMS 2D switch. OCS 1102 may include an array of I/O ports. In this view, I/O ports 1104A-1104I are shown positioned along forward transmission side 1116 of OCS 1102 and I/O ports 1104J-1104R are shown positioned along reverse transmission side 1118. However, in each full I/O port array, there may be a total of 135 I/O ports on forward transmission side 1116 and 135 I/O ports on reverse transmission side 1118, but in other examples, any number of I/O ports may be provided and can be greater than 135 or less than 135 I/O ports. As in the previous examples, each I/O port 1104A-1104R is configured to allow for transmission of both forward and reverse transmission signals. Multi-core fibers 1106A-1106I are coupled to corresponding ports 1104A-1104I and multi-core fibers 1106J-1106R are coupled to corresponding ports along 1104J-1104R. In this example, multi-core fibers 1106A-1106R may be dual core fibers and include a first core and a second core, but in other examples, the number of cores in one or more multi-core fibers in the system can be greater than two.

OCS 1102 may further include a first collimator lens array 1156, a second collimator lens array 1160, a first packaged MEMS mirror array 1162, a second packaged MEMS mirror array 1164, a first camera module 1185, a second camera module 1186, a first dichroic splitter 1187, a second dichroic splitter 1188, a third dichroic splitter 1189, and a first light injection module 1190 and a second light injection module 1191. In this example, first and second collimator lens arrays 1156, 1160 are 2D arrays that may be coupled directly to multi-core fibers at each port of OCS 1102. For example, each fiber of multi-core fibers 1106A-1106R may be rotated and keyed during collimation manufacturing, with the assistance of an imaging system, and fiber maneuver fixtures. In this example, a plurality of mirrors correspond to each of the I/O ports, and in this example, there are 136 mirrors in first packaged MEMS mirror array 1162 and 136 mirrors in second packaged MEMS mirror array 1164, but in other examples, any number of mirrors may be implemented. This allows for a 1:1 ratio between the number of mirrors that correspond with I/O ports 1104A-1104I at forward transmission side and the number of mirror that correspond with I/O ports 1104J-1104R on reverse transmission side.

First and second packaged MEMS mirror arrays 1162, 1164 may include groups of microscopic and individually controllable mirrors that are manufactured using MEMS technology. In this view, micromirrors are schematically represented by mirrors 1166a, 1166b, 1166c in first packaged MEMS mirror array 1162 and mirrors 1166d, 1166e, 1166f in second packaged MEMS mirror array 1164, but it is to be appreciated that any number of mirrors may be aligned along a length of the chip package and arranged in various suitable configurations. In this example, there may be 135 micro mirrors in first packaged MEMS mirror array 1162 and 135 micro mirrors in second packaged MEMS mirror array 1164 so as to correspond to the number I/O ports of OCS 1102, which in this example is 135.

MEMS micromirrors 1166 can perform the optical steering function. Providing two MEMS mirror packages provides four degrees of freedom, which allows optimal coupling of light from inputs and outputs. First packaged MEMS mirror array 1162 may be bonded to or coupled with a first semiconductor chip 1192 and/or otherwise packaged on a silicon chip. Second packaged MEMS mirror array 1164 may also be bonded to or coupled with a second semiconductor chip 1193 and/or otherwise packaged on silicon chip. Mirrors 1166 may be configured so that they can be moved or manipulated with angular precision. For example, mirrors 1166 may be moved by the action of electrostatic force or electromagnetic force. As shown, mirrors 1166a-1166c may be integrated into a housing or chip package 1168A and mirrors 1166d-1166f may be further integrated into chip package or housing 1168B and hermetically sealed.

During operation, and as in the previous examples, OCS 1102 is configured so that each port 1104A-1104R is configured to receive and transmit a forward transmission signal and a reverse transmission signal. The forward and transmissions signals may be transmitted at the same, similar, or different times through each individual port, as well as in relation to other ports. As shown in this example, forward transmission signal 1112-T2e and reverse transmission signal 1114-R1a are transmitted through I/O port 1104E of OCS 1102, as well as I/O port 1104N. Forward transmission signal 1112-T2e may be transmitted through a connector that couples port 1104E with each core of multi-core fiber 1106E, which in this example may be cores 1105E and 1107E. When forward transmission signal 1112-T2e is transmitted to and enters OCS 1102, forward transmission signal 1112-T2e will be directed through port 1104E and through lenslet of first collimator lens array 1156. Forward transmission signal 1112-T2e is collimated, and projected to dichroic splitter 1187, which in turn redirects forward transmission signal 1112-T2e toward first packaged MEMS mirror array 1162. Superposed with forward transmission signal 1112-T2e is a monitoring channel that assists with tuning of the mirrors. As shown, first light injection module 1190 may inject first packaged MEMS array 1162 with light, such as for example, and without limitation, 850 nm light. Forward transmission signal 1112-T2e is redirected by micromirror 1166b to second dichroic splitter 1188. The monitor signals reflected from first packaged MEMS array 1162 are also received at first camera module 1185. A servo (such as control hardware/firmware) utilizes the camera image feedback from camera module 1185 to optimize MEMS actuation of mirrors in first packaged MEMS mirror array and/or second packaged MEMS mirror array for minimum loss of the optical signal path. As shown, forward transmission signal 1112-T2e will be reflected by second dichroic splitter 1188, which redirects transmission signal 1112-T2e to second packaged MEMS mirror array 1164. Forward transmission signal 1112-T2e is redirected by mirror 1166e to third dichroic splitter 1189. Forward transmission signal 1112-T2e is then redirected through lenslet of second fiber collimator lens array 1160 and through I/O port 1104N where it will exit OCS 1102. Forward transmission signal 1112-T2e will then be coupled or injected onto core 1105N of multi-core fiber 1106N.

A return or reverse transmission signal 1114-R1n may also be transmitted back through I/O port 1104N and I/O port 1104E, such that the optical path of a reverse transmission signal follows the same optical path as forward transmission signal 1112-T2e. As shown, the same components can be used to redirect reverse transmission signal 1114-R1n from I/O port 1104N to I/O port 1104E. For example, mirror 1166b of first packaged MEMS mirror array 1162, mirror 1166e of second packaged MEMS mirror array 1164, first, second, and third dichroic splitters 1187, 1188, 1189, first and second light injection modules 1190, 1191, first and second camera modules 1185, 1186, and first and second collimator lens arrays 1156, 1160 may be used to direct reverse transmission signal 1114-R1n from I/O port 1104N to I/O port 1104E.

As shown, reverse transmission signal 1114-R1n may be transmitted along core 1107N and through I/O port 1104N, in the direction shown by arrow B and the subsequent arrows following arrow B. Reverse transmission signal 1114-R1n is transmitted and collimated through a lenslet of second collimator lens array 1160 to third dichroic splitter 1189, which redirects reverse transmission signal RTx to micromirror 1166e of second packaged mirror array 1164. Second light injection module 1191 will also superpose a monitoring channel or light signal onto second packaged MEMS array 1164, which is redirected to camera module 1186. A servo (such as control hardware/firmware) utilizes camera image feedback from camera module 1186 to optimize MEMS actuation of mirrors in second packaged MEMS mirror array 1164 and/or first packaged MEMS mirror array 1162 for minimum loss of the optical signal path. Reverse transmission signal 1114-R1n is transmitted to second dichroic splitter 1188, which redirects reverse transmission signal 1114-R1n to first packaged MEMS mirror array 1162, which in turn redirects reverse transmission signal 1114-R1n to first dichroic splitter 1187. Reverse transmission signal 1114-R1 is then redirected to first collimator lens array 1156 and transmitted through I/O port 1104E. Thereafter, reverse transmission signal 1114-R1n is coupled to core 1107E of multi-core fiber 1106E.

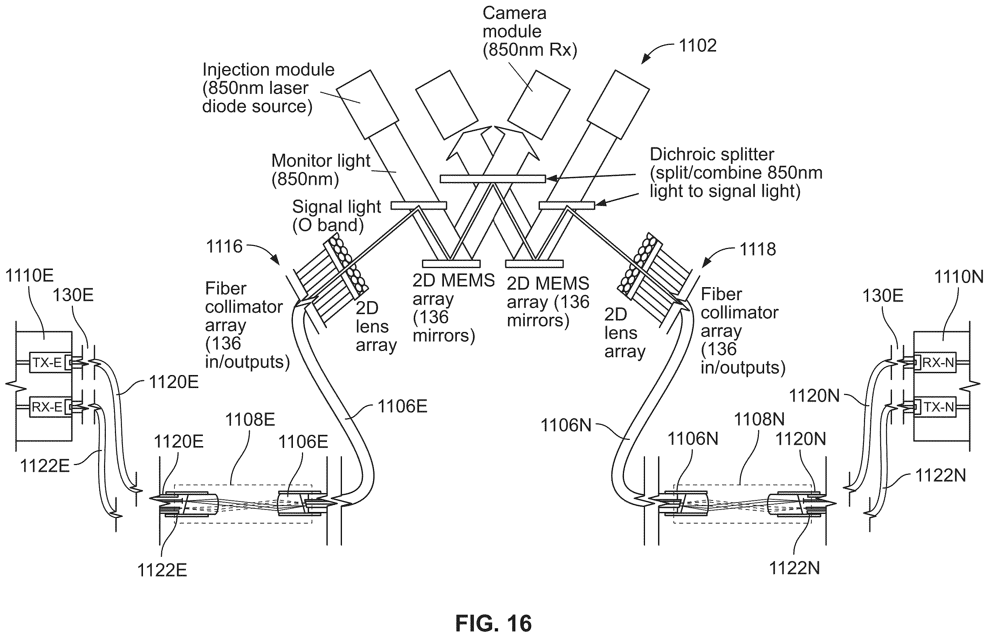

With reference to FIG. 16, although not shown in this view, an array of transceivers may be positioned at forward transmission side of OCS 1102 and an array of transceivers may be positioned at revers transmission side of OCS 1102. Each transceiver may be coupled to an I/O port on OCS 1102, such that there is a one-to-one correspondence between each transceiver and each I/O port on forward transmission side, as well as a one-to-one correspondence between each transceiver and I/O port on reverse transmissions side. Additionally, in this example, there can be an equal number of I/O ports on forward transmission side 1116 and reverse transmission side 1118. But, in other examples, one or more I/O ports may not correspond to the number of transceivers. Although only one transceiver 1110E is depicted at forward transmissions side 1116 of OCS 1102 and one transceiver 1110N is depicted at reverse transmission side 1118 of OCS 1102, it is to be appreciated that there are numerous transceivers corresponding to the I/O ports of OCS 1102.

As in the previous examples, the transceivers in the optical communication system may transmit a forward transmission signal and receive a reverse transmission signal through corresponding single-core fibers. Single-core fiber 1120E is depicted as being coupled to transceiver TX-E through a connector 1130E. Single-core fiber 1120E may extend from transmitter TX-3 to FI/FO device 1108E and carry forward transmission signal from transmitter TX-3 to FI/FO device. Single-core fiber 1122E may similarly be coupled to receiver RX-E through connector 1130E and extend to FI/FO device 1108E. Single-core fiber 1122E may carry and transmit reverse transmission signal received from FI/FO device 1108 to receiver RX-E.

As in the previous example, FI/FO device 1108E is configured to couple single-core fiber 1120E with multi-core fiber 1106E, and particularly, core 1105E of multi-core fiber 1106E, as well as couple single-core fiber 1120E with core 1107E of multi-core fiber 1106E. Multi-core fiber 1106E can be coupled to OCS 1102 with a connector at I/O port 1104E and configured to transmit forward receiving signal 112-T2a and reverse transmission signal 1114-R1a. It is to be appreciated that transceiver 110E and FI/FO device 1108 may be located close to one or another or further apart from one another, including miles apart from one another, as indicated by the presence of break lines. Similarly, OCS 1102 and FI/FO device 1108E may be located close to one another or far apart from one another.

The reverse path will also be similar, as previously described herein. For example, at output side of OCS 1102, multi-core fiber 1106N may be coupled to port 1104N with a connector. Collimated reverse transmission signal 1114-R1n will be injected onto or coupled to core 1105N of multi-core fiber 1106N. Reverse transmission signal 1114-R1n will then be decoupled within FI/FO device 1108N and coupled to single-core fiber 1120N, which in turn may be coupled to receiver RX-N of transceiver 1110N. The reverse transmission signal can be transmitted from transmitter TX-N of transceiver 1110N to receiver RX-E of transceiver 1110E to 1110N through OCS 1102, as previously described herein.

This configuration reduces the number of overall mirrors and ports required in the system since both the forward and reverse transmission signals 1112-T2a, 1114-R1g can be reflected transmitted to the mirrors with precision. This configuration also eliminates back reflections and cross-talk that are present in existing bidirectional systems.

In the examples disclosed herein, the forward and reverse transmission signals and the corresponding core fibers carrying the signals were schematically represented in several of the figures for illustrative purposes. Although the core fibers and/or the forward and reverse transmission signals may be illustrated in an upper position and/or a lower location relative to one another in the figures, it is to be appreciated that they can be arranged in any other orientations relative to one another, such as, but not limited to directly adjacent to one another, or in the reverse orientations.

According to an aspect of the disclosure, an optical communication system includes a forward transmission transceiver and a reverse transmission transceiver in optical communication along an optical path; an optical circuit switch ("OCS") optically coupled to the forward transmission transceiver and the reverse transmission transceiver; a first single-core fiber and a second single-core fiber both coupled to the forward transmission transceiver; a multi-core fiber coupled to the first optical port; and a fan-in/fan-out device ( "FI/FO device"). The OCS has at least a first optical port and a second optical port, the OCS providing for communication between the forward and reverse transmission transceivers along the optical path. The first single-core fiber may be configured to transmit a forward optical transmission signal received from the forward transceiver to the reverse transmission receiver through the OCS. The second single-core fiber may be configured to transmit a reverse optical transmission signal transmitted from the reverse transmission transceiver to the forward transmission transceiver through the OCS. The fan-in/fan-out device may further include a first collimator and a second collimator aligned with one another along the optical path. The FI/FO device may be configured to optically couple the forward optical transmission signal transmitted through the first single-core fiber with a core of the multi-core fiber. The first optical port may be coupled to the multi-core fiber. The first optical port may be configured to both transmit the forward optical transmission signal received from the first optical port to the second optical port and receive the reverse optical transmission signal transmitted from the second optical port along the optical path; and/or
the core is a first core of the multi-core fiber, and wherein the reverse optical transmission signal transmitted through the OCS is coupled with a second core of the multi-core fiber; and/or
the second optical port is configured to both transmit the forward optical transmission signal received from the first optical port to the reverse transceiver and transmit the reverse optical transmission signal received from the reverse transceiver to the first transceiver along the optical path; and/or
the second optical port is configured to both transmit the forward optical transmission signal received from the forward transmission transceiver to the reverse transmission transceiver and to transmit the reverse optical transmission signal received from the reverse transmission transceiver to the forward transmission transceiver along the optical path; and/or
the first single-core fiber and the second single-core fiber are single-mode fibers; and/or
the first single-core fiber and the second single-core fiber comprise single-mode fibers; and/or
the multi-core fiber is a first multi-core fiber and the optical communication system further includes a second multi-core fiber. The optical circuit switch further includes a multi-core fiber collimator; and a mirror etched on a silicon chip. The mirror may be angled to redirect the forward optical transmission signal received from the first core of the first multi-core fiber at the first optical port of the OCS to a third core of the second multi-core fiber at the second optical port of the OCS switch and to redirect the reverse optical transmission signal received from the second multi-core fiber to the first core of the first multi-core fiber, such that the forward and reverse optical transmission signals are both reflected by the mirror and transmitted through the first optical port; and/or
the first and second collimators comprise micro-lens collimators having different focal lengths; and/or
the first collimator comprises a first micro-lens having a first focal length and the second collimator comprises a second micro-lens having a second length that is different than the first focal length; and/or
the first and second collimators are further configured to diplex the forward optical transmission signal transmitted through the first core of the multi-core fiber and the reverse optical transmission signal transmitted through the first optical port and the second core of the multi-core fiber; and/or
the FI/FO device further comprises a laser diode configured to illuminate the first single-core fiber; and/or
the multi-core fiber is a dual core fiber, wherein the core of the multi-core fiber is a first core and the multi-core fiber further comprises a second core; and/or
the second core is optically coupled to the second single-core fiber; and/or
an optical signal that is transmitted along the optical path is a forward optical transmission signal when transmitted from the forward transmission transceiver to the reverse transmission transceiver through the OCS and the optical signal is the reverse optical transmission signal when transmitted from the second transceiver to the first transceiver through the OCS; and/or
the forward optical transmission signal and the reverse optical transmission signal are simultaneously transmitted through the first optical port and the second optical port; and/or
the forward optical transmission signal and the reverse optical transmission signal are transmitted in series; and/or
the multi-core fiber is a first multi-core fiber, the FI/FO device is a first FI/FO device, and the system further comprises a third single-core fiber, a fourth single-core fiber, a second multi-core fiber, and a second FI/FO device. The third and fourth single-core fibers, the second multi-core fiber, and the second FI/FO device extend along the optical path. The third single-core fiber is configured to transmit the reverse optical transmission signal received from the reverse transmission transceiver to the second multi-core fiber. The second FI/FO device couples the third single-core fiber with the second multi-core fiber. The fourth single-core fiber is configured to transmit a forward optical transmission signal received from the second multi-core fiber to the reverse transceiver. The second FI/FO device couples the fourth single-core fiber with the second multi-core fiber; and/or
the forward optical transmission signal is a first transmission signal; the reverse optical transmission signal is a first reverse optical transmission signal, the optical path is a first optical path, the forward transmission transceiver is a first forward transmission transceiver, the reverse transmission transceiver is a first reverse transmission transceiver, and the OCS further comprises a third optical port and a fourth optical port. The optical communication system further includes a second forward transmission transceiver, a second reverse transmission transceiver, a third FI/FO device, and a fourth FI/FO device; a third multi-core fiber coupled to the third optical port and a fourth multi-core fiber coupled to the fourth optical port; a fifth single-core fiber; a sixth single-core fiber, a seventh single-core fiber, and an eighth single-core fiber. The second forward transmission transceiver and the second reverse transmission transceiver are in optical communication with one another along a second optical path extending through the OCS. The fifth single-core fiber is configured to transmit the second forward optical transmission signal received from the second forward transceiver to the third multi-core fiber. The third FI/FO device optically couples the fifth single-core fiber with the third multi-core fiber. The sixth single-core fiber is configured to transmit a second reverse optical transmission signal received from the third multi-core fiber to the second forward transceiver. The third FI/FO device optically couples the third multi-core fiber with the sixth single-core fiber. The seventh single-core fiber is configured to transmit the second forward optical transmission signal received from the fourth multi-core fiber to the second reverse transmission transceiver. The fourth FI/FO device optically couples the seventh single-core fiber with the fourth multi-core fiber. The eighth single-core fiber is configured to transmit the second reverse optical transmission signal received from the second reverse transceiver to the fourth multi-core fiber. The fourth FI/FO device optically couples the eighth single-core fiber with the fourth multi-core fiber. The third optical port is coupled to the third multi-core fiber and is configured to receive and transmit the second forward optical transmission signal and the second reverse optical transmission signal. The fourth optical port is coupled to the fourth multi-core fiber and is configured to receive and transmit the second forward optical transmission signal and the second reverse optical transmission signal; and/or
a third single-core fiber is coupled to the first transceiver and a fourth single-core fiber is coupled to the first transceiver. The third single-core fiber is optically coupled to a third core of the multi-core fiber, and the fourth single-core fiber is optically coupled to a fourth core of the multi-core fiber; and/or
the system further includes a second multi-core fiber coupled to the second optical port, a third single-core fiber, a fourth single-core fiber. The second multi-core fiber comprises a second core and a third core. The third single-core fiber may be optically coupled to the forward and reverse transmission transceivers. The fourth single-core fiber may be optically coupled to the forward and reverse transmission transceivers. The third single-core fiber may be optically coupled to the second core of the multi-core fiber. The fourth single-core fiber may be optically coupled to the third core of the second multi-core fiber; and/or
the OCS further includes one of a micro-electromechanical system ("MEMS") switch, a piezoelectric actuator switch, a robotic switch, or a liquid crystal switch; and/or
the OCS further includes a MEMS switch comprising two packaged MEMS mirror arrays that each further comprise a semiconductor chip, and two collimator lens arrays; and/or
the MEMS switch further comprises two cameras and three dichroic splitters.

According to another aspect of the disclosure, a Micro-Electromechanical System ("MEMS") switch includes a first optical port, a second optical port, a first multi-core fiber, a second multi-core fiber, a first MEMS die mirror array and a second MEMS die mirror array, and a first multi-core fiber collimator and a second multi-core fiber collimator optically coupled to the first and second MEMS die mirror arrays. The first multi-core fiber is coupled to the first optical port and includes a first core and a second core. The second multi-core fiber is coupled to the second optical port and includes a third core and a fourth core. The first MEMS die mirror array and the second MEMS die mirror array can be optically coupled to the first and second optical ports. The first multi-core fiber collimator and the second multi-core fiber collimator optically coupled to the first and second die mirror arrays. The first core of the first multi-core fiber is configured to transmit a forward transmission signal along an optical path through the first optical port to the third core of the second multi-core fiber at the second optical port. The third core of the second multi-core fiber is configured to transmit a reverse transmission signal along the optical path through the second optical port to the first core of the first multi-core fiber at the first optical port. A first same mirror in the first MEMS die mirror array and a second same mirror in the second MEMS die mirror array are configured to simultaneously transmit the forward transmission signal and the reverse transmission signal between the first optical port and the second optical port; and/or
a first connector directly couples the first multi-core fiber to the first optical port and the second multi-core fiber to the second optical port; and/or
a first connector couples the first multi-core fiber to the first optical port and a second connector couples the second multi-core fiber to the second optical port; and/or
the optical path is a first optical path, , the forward transmission signal is a first transmission signal, the reverse transmission signal is a first reverse transmission signal, and the MEMS switch further includes a third multi-core fiber and a fourth multi-core fiber. The third multi-core fiber is coupled to a third optical port and may further include a fifth core and a sixth core The fourth multi-core fiber is coupled to a fourth optical port and may further include a seventh core and an eighth core. The fifth core of the third multi-core fiber is configured to transmit a second forward transmission signal through the third optical port to the seventh core of the fourth multi-core fiber at the second optical port along a second optical path. The eighth core of the fourth multi-core fiber is configured to transmit a second reverse transmission signal through the fourth optical port to the sixth core of the third multi-core fiber at the third optical port along the second optical path. The another same mirror in the first MEMS die mirror array and the another same mirror in the second MEMS die mirror array are configured to simultaneously transmit the second forward transmission signal and the second reverse transmission signal between the third optical port and the fourth optical port; and/or
the MEMS switch further includes two cameras and three dichroic splitters.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including," and the like, should not be interpreted as limiting the subject matter of the claims to the specific examples; rather, the examples are intended to illustrate only one of many possible implementations. Further, the same or similar reference numbers in different drawings can identify the same or similar elements.

## Claims

1. An optical communication system comprising:
a forward transmission transceiver and a reverse transmission transceiver in optical communication along an optical path;
an optical circuit switch ("OCS") optically coupled to the forward transmission transceiver and the reverse transmission transceiver, the OCS having at least a first optical port and a second optical port, the OCS providing for communication between the forward and reverse transmission transceivers along the optical path;
a first single-core fiber and a second single-core fiber both coupled to the forward transmission transceiver, the first single-core fiber configured to transmit a forward optical transmission signal received from the forward transmission transceiver to the reverse transmission receiver through the OCS, and the second single-core fiber configured to transmit a reverse optical transmission signal transmitted from the reverse transmission transceiver to the forward transmission transceiver through the OCS;
a multi-core fiber coupled to the first optical port; and
a fan-in/fan-out device ( "FI/FO device") further comprising a first collimator and a second collimator aligned with one another along the optical path,
wherein the FI/FO device is configured to optically couple the forward optical transmission signal transmitted through the first single-core fiber with a core of the multi-core fiber, and
wherein the first optical port is coupled to the multi-core fiber, and wherein the first optical port is configured to both transmit the forward optical transmission signal received from the first optical port to the second optical port and receive the reverse optical transmission signal transmitted from the second optical port along the optical path.

2. The system of claim 1, wherein the core of the multi-core fiber is a first core of the multi-core fiber, and wherein the reverse optical transmission signal transmitted through the OCS is coupled with a second core of the multi-core fiber.

3. The system of claim 2, wherein the second optical port is configured to both transmit the forward optical transmission signal received from the forward transmission transceiver to the reverse transmission transceiver and to transmit the reverse optical transmission signal received from the reverse transmission transceiver to the forward transmission transceiver along the optical path.

4. The system of any one of claims 1 to 3, wherein the first single-core fiber and the second single-core fiber comprise single-mode fibers.

5. The system of any one of claims 2 to 4, wherein the multi-core fiber is a first multi-core fiber, the system further comprising a second multi-core fiber, and
wherein the OCS further comprises:
a multi-core fiber collimator; and
a mirror etched on a silicon chip, the mirror being angled to redirect the forward optical transmission signal received from the first core of the first multi-core fiber at the first optical port of the OCS to a third core of the second multi-core fiber at the second optical port of the OCS and to redirect the reverse optical transmission signal received from the second multi-core fiber to the first core of the first multi-core fiber, such that the forward and reverse optical transmission signals are both reflected by the mirror and transmitted through the first optical port.

6. The system of any one of claims 1 to 5, wherein the first collimator comprises a first micro-lens having a first focal length and the second collimator comprises a second micro-lens having a second length that is different than the first focal length.

7. The system of any one of claims 2 to 6, wherein the first and second collimators are further configured to diplex the forward optical transmission signal transmitted through the first core of the multi-core fiber and the reverse optical transmission signal transmitted through the first optical port and the second core of the multi-core fiber.

8. The system of any one of claims 1 to 7, wherein the FI/FO device further comprises a laser diode configured to illuminate the first single-core fiber; and/or
wherein the multi-core fiber is a dual-core fiber, wherein the core of the multi-core fiber is a first core and the multi-core fiber further comprises a second core; and
wherein optionally the second core is optically coupled to the second single-core fiber.

9. The system of any one of claims 1 to 8, wherein an optical signal transmitted along the optical path is the forward optical transmission signal when transmitted from the forward transmission transceiver to the reverse transmission transceiver through the OCS and the optical signal is the reverse optical transmission signal when transmitted from the reverse transmission transceiver to the forward transmission transceiver through the OCS.

10. The system of any one of claims 1 to 9, wherein the forward optical transmission signal and the reverse optical transmission signal are simultaneously transmitted through the first optical port and the second optical port; or
wherein the forward optical transmission signal and the reverse optical transmission signal are transmitted in series.

11. The system of any one of claims 1 to 10, wherein the multi-core fiber is a first multi-core fiber, the FI/FO device is a first FI/FO device, and the system further comprises a third single-core fiber, a fourth single-core fiber, a second multi-core fiber, and a second FI/FO device, wherein the third and the fourth single-core fibers, the second multi-core fiber, and the second FI/FO device extend along the optical path,
wherein the third single-core fiber is configured to transmit the reverse optical transmission signal received from the reverse transmission transceiver to the second multi-core fiber, wherein the second FI/FO device couples the third single-core fiber with the second multi-core fiber, and
wherein the fourth single-core fiber is configured to transmit a forward optical transmission signal received from the second multi-core fiber to the reverse transceiver, wherein the second FI/FO device couples the fourth single-core fiber with the second multi-core fiber.

12. The system of claim 11, wherein the forward optical transmission signal is a first optical transmission signal, the reverse optical transmission signal is a first reverse optical transmission signal, the optical path is a first optical path, the forward transmission transceiver is a first forward transmission transceiver, and the reverse transmission transceiver is a first reverse transmission transceiver,
wherein the OCS further comprises a third optical port and a fourth optical port,
wherein the optical communication system further comprises:
a second forward transmission transceiver and a second reverse transmission transceiver in optical communication along a second optical path extending through the OCS;
a third FI/FO device and a fourth FI/FO device positioned along the second optical path;
a third multi-core fiber coupled to the third optical port and a fourth multi-core fiber coupled to the fourth optical port;
a fifth single-core fiber configured to transmit the second forward optical transmission signal received from the second forward transmission transceiver to the third multi-core fiber, wherein the third FI/FO device optically couples the fifth single-core fiber with the third multi-core fiber;
a sixth single-core fiber configured to transmit a second reverse optical transmission signal received from the third multi-core fiber to the second forward transmission transceiver, wherein the third FI/FO device optically couples the third multi-core fiber with the sixth single-core fiber;
a seventh single-core fiber configured to transmit the second forward optical transmission signal received from the fourth multi-core fiber to the second reverse transceiver, wherein the fourth FI/FO device optically couples the seventh single-core fiber with the fourth multi-core fiber; and
an eighth single-core fiber configured to transmit the second reverse optical transmission signal received from the second reverse transceiver to the fourth multi-core fiber, wherein the fourth FI/FO device couples the eighth single-core fiber with the fourth multi-core fiber,
wherein the third optical port is coupled to the third multi-core fiber and is configured to receive and transmit the second forward optical transmission signal and the second reverse optical transmission signal and the fourth optical port is coupled to the fourth multi-core fiber and is configured to receive and transmit the second forward optical transmission signal and the second reverse optical transmission signal.

13. The system of any one of claims 1 to 12, further comprising a second multi-core fiber coupled to the second optical port; a third single-core fiber optically coupled to the forward and reverse transmission transceivers; and a fourth single-core fiber optically coupled to the forward and reverse transmission transceivers,
wherein the second multi-core fiber further comprises a second core and a third core, and
wherein the third single-core fiber is optically coupled to the second core of the multi-core fiber, and the fourth single-core fiber is optically coupled to the third core of the second multi-core fiber; and/or
wherein the OCS further comprises one of a micro-electromechanical system ("MEMS") switch, a piezoelectric actuator switch, a robotic switch, or a liquid crystal switch.

14. A micro-electromechanical system ("MEMS") switch comprising:
a first optical port;
a second optical port;
a first multi-core fiber coupled to the first optical port comprising a first core and a second core;
a second multi-core fiber coupled to the second optical port comprising a third core and a fourth core;
a first MEMS die mirror array and a second MEMS die mirror array, each of the first and second MEMS die mirror arrays being optically coupled to the first and second optical ports; and
a first multi-core fiber collimator and a second multi-core fiber collimator optically coupled to the first and second MEMS die mirror arrays,
wherein the first core of the first multi-core fiber is configured to transmit a forward transmission signal along an optical path through the first optical port to the third core of the second multi-core fiber at the second optical port,
wherein the third core of the second multi-core fiber is configured to transmit a reverse transmission signal along the optical path through the second optical port to the first core of the first multi-core fiber at the first optical port, and
wherein a first same mirror in the first MEMS die mirror array and a second same mirror in the second MEMS die mirror array are configured to simultaneously transmit the forward transmission signal and the reverse transmission signal between the first optical port and the second optical port.

15. The MEMS switch of claim 14, further comprising a first connector coupling the first multi-core fiber to the first optical port and a second connector coupling the second multi-core fiber to the second optical port; and/or
wherein the optical path is a first optical path, the forward transmission signal is a first transmission signal, the reverse transmission signal is a first reverse transmission signal, and the MEMS switch further comprises:
a third multi-core fiber coupled to a third optical port and comprising a fifth core and a sixth core; and
a fourth multi-core fiber coupled to a fourth optical port and comprising a seventh core and an eighth core;
wherein the fifth core of the third multi-core fiber is configured to transmit a second forward transmission signal through the third optical port to the seventh core of the fourth multi-core fiber at the second optical port along a second optical path,
wherein the eighth core of the fourth multi-core fiber is configured to transmit a second reverse transmission signal through the fourth optical port to the sixth core of the third multi-core fiber at the third optical port along the second optical path, and
wherein another same mirror in the first MEMS die mirror array and another same mirror in the second MEMS die mirror array are configured to simultaneously transmit the second forward transmission signal and the second reverse transmission signal between the third optical port and the fourth optical port.
